(19) Europäisches Patentamt / European Patent Office / Office européen des brevets

(11) **EP 4 535 854 A1**

(12) **EUROPEAN PATENT APPLICATION**
published in accordance with Art. 153(4) EPC

(43) Date of publication:
**09.04.2025 Bulletin 2025/15**

(21) Application number: **23822835.7**

(22) Date of filing: **09.05.2023**

(51) International Patent Classification (IPC):
***H04W 24/08*** (2009.01)

(52) Cooperative Patent Classification (CPC):
**H04W 4/02; H04W 24/08; H04W 48/16;
H04W 48/20; H04W 64/00**

(86) International application number:
**PCT/CN2023/092862**

(87) International publication number:
**WO 2023/241264 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.06.2022 CN 202210661942**

(71) Applicant: **Huawei Technologies Co., Ltd.
Shenzhen, Guangdong 518129 (CN)**

(72) Inventors:
• **GUO, Yinghao
  Shenzhen, Guangdong 518129 (CN)**
• **ZHANG, Li
  Shenzhen, Guangdong 518129 (CN)**

(74) Representative: **Maiwald GmbH
Engineering
Elisenhof
Elisenstrasse 3
80335 München (DE)**

(54) **CELL MEASUREMENT METHOD AND RELATED APPARATUS**

(57) This application discloses a cell measurement method and a related apparatus, and relates to the field of communication technologies. The method includes: obtaining cell information; measuring at least one cell indicated by the cell information, to obtain a measurement result; determining at least one target cell based on the measurement result; and sending a positioning request to a first network device, where the positioning request includes information about the at least one target cell.

This method provides technical content of how a terminal device should perform cell measurement in a positioning scenario in an idle state or an inactive state. According to the cell measurement method in embodiments of this application, the target cell that satisfies a positioning requirement can be obtained, and the positioning request is performed based on the target cell obtained through measurement, so that positioning accuracy can be improved.

```
Terminal                                    First network
device                                      device
   |                                            |
[S601: Obtain cell information]                 |
   |                                            |
[S602: Measure at least one cell                |
 indicated by the cell information,             |
 to obtain a measurement result]                |
   |                                            |
[S603: Determine at least one                   |
 target cell based on the                       |
 measurement result]                            |
   |                                            |
   |  S604: Positioning request (information     |
   |  about the at least one target cell)        |
   |------------------------------------------->|
   |                                            |
```

FIG. 6

**Description**

This application claims priority to Chinese Patent Application No. 202210661942.9, filed with the China National Intellectual Property Administration on June 13, 2022 and entitled "CELL MEASUREMENT METHOD AND RELATED APPARATUS", which is incorporated herein by reference in its entirety.

**TECHNICAL FIELD**

This application relates to the field of communication technologies, and in particular, to a cell measurement method and a related apparatus.

**BACKGROUND**

Generally, when performing cell selection or cell reselection, a terminal device in an idle state or an inactive state needs to select, through cell measurement, a cell to camp on.
Currently, in a positioning scenario of the terminal device in the idle state or the inactive state, a cell measurement method in a cell selection or cell reselection process is usually used to find a suitable cell for a positioning request, to implement uplink positioning.
However, the cell measured by using the foregoing cell measurement method is used for uplink positioning, and positioning accuracy is low.
Therefore, the cell measurement method in the positioning scenario of the terminal device in the idle state or the inactive state needs to be improved.

**SUMMARY**

Embodiments of this application provide a cell measurement method and a related apparatus, to improve cell measurement in a positioning scenario of a terminal device in an idle state or an inactive state, so that positioning accuracy of a measured cell used for uplink positioning is improved.
According to a first aspect, an embodiment of this application provides a cell measurement method. The method includes:

obtaining cell information;
measuring at least one cell indicated by the cell information, to obtain a measurement result;
determining at least one target cell based on the measurement result; and
sending a positioning request to a first network device, where the positioning request includes information about the at least one target cell.

In this embodiment of this application, the cell measurement method is provided. A terminal device obtains the cell information. The cell information includes but is not limited to a cell identifier, a frequency carrier on which a cell is located, synchronization signal block SSB sending information of a cell, and the like. The cell identifier may be specifically a physical cell identifier PCI, and the PCI is a cell identifier carried in a reference signal sent by a base station in a cell, or may be another cell identifier, for example, a new radio cell global identifier NCGI. The terminal device measures the at least one cell indicated by the cell information, to obtain the measurement result. It may be understood that the terminal device may measure some cells indicated by the cell information, or may measure all cells indicated by the cell information, to obtain the measurement result. The measurement result includes but is not limited to a reference signal received power RSRP, reference signal received quality RSRQ, a received signal strength indication RSSI, and the like. The terminal device determines the at least one target cell based on the measurement result. It may be understood that the terminal device may determine two or more target cells, and a plurality of target cells are used for positioning. This helps improve positioning accuracy. The terminal device sends the positioning request to the first network device, where the positioning request includes the information about the at least one target cell. It may be understood that the positioning request may be for requesting uplink positioning, or may be for requesting low-power high-accuracy positioning LPHAP. Current cell measurement in an idle state or an inactive state is applicable only to a cell selection or cell reselection process, and is not applicable to cell measurement in a positioning process. In addition, technical content of how the terminal device should perform cell measurement in a positioning scenario is not provided. In other words, if a current cell measurement method in the idle state or the inactive state (that is, a cell measurement method in the cell selection or cell reselection process) is used, a cell obtained through measurement is not applicable to uplink positioning, the positioning request is performed based on the cell obtained through measurement, and this greatly affects positioning accuracy. In contrast, this embodiment of this application provides technical content of how the terminal device should perform cell measurement in the positioning scenario in the idle state or the inactive state. According to the cell measurement method in this embodiment of this application, the target cell that satisfies a positioning requirement can be obtained, and the positioning request is performed based on the target cell obtained through measurement, so that the positioning accuracy can be improved.

In a possible implementation, the measuring at least one cell indicated by the cell information includes: measuring, in descending order of frequency priorities and/or cell priorities, the at least one cell indicated by the cell information.

In this embodiment of this application, a possible specific implementation of measuring the at least one cell indicated by the cell information is provided. Specifically, that the terminal device measures, in descending order of the frequency priorities and/or the cell priorities, the at least one cell indicated by the cell information may be that some cells indicated by the cell information are measured, or may be that all the cells indicated by the cell information are measured. In this embodiment of this application, a sequence of measuring the cells indicated by the cell information is provided. On a premise that a specific quantity of target cells for positioning is determined, a required cell may be first measured, to obtain the target cell that satisfies the positioning requirement, and the positioning request is performed based on the target cell obtained through measurement, so that the positioning accuracy can be improved.

In a possible implementation, the measuring, in descending order of frequency priorities and/or cell priorities, the at least one cell indicated by the cell information includes: when cells indicated by the cell information include a plurality of cells with a same frequency priority, measuring the plurality of cells with the same frequency priority in descending order of cell priorities.

In this embodiment of this application, a possible specific implementation of measuring the at least one cell indicated by the cell information is provided. Specifically, when the cells indicated by the cell information include the plurality of cells with the same frequency priority, that the terminal device measures the plurality of cells with the same frequency priority in descending order of the cell priorities may be that some of the plurality of cells with the same frequency priority are measured, or may be that all of the plurality of cells with the same frequency priority are measured. In this embodiment of this application, a sequence of measuring the plurality of cells with the same frequency priority is provided. On the premise that the specific quantity of target cells for positioning is determined, the required cell may be first measured, to obtain the target cell that satisfies the positioning requirement, and the positioning request is performed based on the target cell obtained through measurement, so that the positioning accuracy can be improved.

In a possible implementation, the measuring at least one cell indicated by the cell information includes: when both first measurement and second measurement exist, preferentially performing the first measurement, where the first measurement includes measuring, in a positioning scenario, the at least one cell indicated by the cell information, and the second measurement includes measuring a found cell in a scenario of cell selection or cell reselection.

In a possible implementation, the determining at least one target cell includes: when a signal received power of a first cell is greater than a power threshold, or signal received quality is greater than a quality threshold, or a value of R in an R criterion is greater than a threshold, or a value of S in an S criterion is greater than a threshold, determining the first cell as the target cell, where the first cell is a cell that has been measured, that supports positioning, and that is in the cells indicated by the cell information.

In this embodiment of this application, a possible specific implementation of determining the at least one target cell is provided. Specifically, when the cell indicated by the cell information is measured, a value relationship between a signal received power of the cell and the power threshold is determined, or a value relationship between signal received quality of the cell and the quality threshold is determined, or a value relationship between a value of R in the R criterion and the threshold is determined, or a value relationship between a value of S in the S criterion and the threshold is determined, to further determine whether to determine the cell as the target cell. For example, when the first cell is measured, it is determined that the signal received power of the first cell is greater than the power threshold, or the signal received quality of the first cell is greater than the quality threshold, or the value of R in the R criterion is greater than the threshold, or the value of S in the S criterion is greater than the threshold, and the first cell is determined as the target cell. It may be understood that the first cell is the cell that has been measured, that supports positioning, and that is in the cells indicated by the cell information. The terminal device may determine two or more target cells, and a plurality of target cells are used for positioning. This helps improve the positioning accuracy. In this embodiment of this application, technical content of determining the at least one target cell based on the measurement result is provided, so that when determining that a quantity of target cells for positioning reaches a required quantity, the terminal device can stop measurement of remaining cells, in other words, there is no need to measure all the cells indicated by the cell information. Therefore, cell measurement time and target cell determining time are reduced, the target cell that satisfies the positioning requirement can be obtained, and the positioning request is performed based on the target cell obtained through measurement, so that the positioning accuracy can be improved.

In a possible implementation, the determining at least one target cell includes: determining the first N second cells as the target cells in descending order of values of R in an R criterion, or values of S in an S criterion, or cell signal received powers, or cell signal received quality, where the second cell is a cell that has been measured, that supports positioning, and that is in the cells indicated by the cell information.

In this embodiment of this application, a possible specific implementation of determining the at least one target cell is provided. Specifically, after all the cells indicated by the cell information have been measured, the cells indicated by the cell information are sorted in descending order of values of R in the R criterion, or values of S in the S criterion, or cell signal received powers, or cell signal received quality, and the first N cells that support positioning are determined as the target cells. For example, it is learned, based on a sorting result, that the second cell is in the first N cells that support positioning, and the second cell is determined as the target cell. It may be understood that the second cell is the cell that has been measured, that supports positioning, and that is in the cells indicated by the cell information. The terminal device may determine two or more target cells, and a plurality of target cells are used for positioning. This helps improve the positioning accuracy. In this embodiment of this application, technical content of determining the at least one target cell based on the measurement result is provided, so that when the specific quantity of target cells for positioning is determined, a specific quantity of target cells that relatively satisfy the positioning requirement can be selected from all the cells indicated by cell information, and the positioning request is performed based on the target cell obtained through measurement, so that the positioning accuracy can be improved.

In a possible implementation,

the cell information is carried in either of the following messages: a broadcast message and a radio resource control RRC message; or
the cell information is preconfigured information.

In this embodiment of this application, several possible specific implementations of obtaining the cell information are provided. Specifically, the cell information may be configured by a network side by using the broadcast message, the cell indicated by the cell information may include a cell that supports positioning, or may include a cell that does not support positioning, and the terminal device obtains the cell information by receiving the broadcast message from the network side. Alternatively, the cell information may be configured by a network side by using dedicated signaling such as the radio resource control RRC message, the cell indicated by the cell information includes a cell that supports positioning, and the terminal device obtains the cell information by receiving the RRC message from the network side. Alternatively, the cell information may be preconfigured by the terminal device, and the terminal device obtains the cell information by reading configuration information such as a configuration list. This is not limited in embodiments of this application. In this embodiment of this application, cell information indicating a to-be-measured cell may be obtained. The cell information includes but is not limited to a cell identifier, a frequency carrier on which a cell is located, synchronization signal block SSB sending information of a cell, and the like. The cell identifier may be specifically a physical cell identifier PCI, and the PCI is a cell identifier carried in a reference signal sent by a base station in a cell, or may be another cell identifier, for example, a new radio cell global identifier NCGI.

In a possible implementation,

information about the cell priority and/or the frequency priority is carried in a broadcast message or an RRC message; or
information about the cell priority and/or the frequency priority is preconfigured information.

In this embodiment of this application, several possible specific implementations of obtaining the information about the cell priority and/or the frequency priority are provided. Specifically, priority information may be configured by a network side by using dedicated signaling such as the broadcast message or the RRC message, the priority information includes the information about the cell priority and/or the frequency priority, and the terminal device obtains the information about the cell priority and/or the frequency priority by receiving the broadcast message or the RRC message from the network side. Alternatively, the information about the cell priority and/or the frequency priority may be preconfigured by the terminal device, and the terminal device obtains the information about the cell priority and/or the frequency priority by reading configuration information such as a configuration list. This is not limited in embodiments of this application. In this embodiment of this application, the information about the cell priority and/or the frequency priority for determining a cell measurement sequence may be obtained. On the premise that the specific quantity of target cells for positioning is determined, the required cell may be first measured based on the cell priority and/or the frequency priority, to obtain the target cell that satisfies the positioning requirement, and the positioning request is performed based on the target cell obtained through measurement, so that the positioning accuracy can be improved.

In a possible implementation, the measuring at least one cell indicated by the cell information includes:

obtaining a measurement indication, where the measurement indication indicates to measure the at least one cell indicated by the cell information; and
measuring the at least one cell indicated by the cell information.

In this embodiment of this application, a possible specific implementation of measuring the at least one cell indicated by the cell information is provided. Specifically, the terminal device obtains the measurement indication, and measures, based on the measurement indication, the at least one cell indicated by the cell information, to obtain the measurement result. This embodiment of this application provides technical content of a measurement start condition for performing cell measurement by the terminal device in the positioning scenario. According to the cell measurement method in this embodiment of this application, cell measurement may be triggered under a corresponding condition, to obtain the target cell that satisfies the positioning requirement, and the positioning request is performed based on the target cell obtained through measurement, so that the positioning accuracy can be improved.

In a possible implementation, the obtaining a measurement indication includes:

when a higher layer detects a positioning event or a positioning indication, receiving the measurement indication from the higher layer.

In this embodiment of this application, a possible specific implementation of obtaining the measurement indication is provided. Specifically, when the higher layer of the terminal device detects the positioning event or the positioning indication, the higher layer sends the measurement indication to a lower layer. Correspondingly, the lower layer receives the measurement indication from the higher layer. The detected positioning event may be a positioning event triggered by a location change of the terminal device, or may be a positioning event triggered by the terminal device based on a positioning-related service requirement. The detected positioning indication may be a positioning indication sent by the network side to the terminal device, to indicate the terminal device to perform positioning. Alternatively, the terminal device may trigger, based on a positioning-related service requirement, the higher layer to deliver the positioning indication to the lower layer, to indicate the lower layer to perform positioning. This embodiment of this application provides technical content of obtaining the measurement indication by the terminal device in the positioning scenario to trigger cell measurement. According to the cell measurement method in this embodiment of this application, the measurement indication may be obtained under a corresponding condition to trigger cell measurement, to obtain the target cell that satisfies the positioning requirement, and the positioning request is performed based on the target cell obtained through measurement, so that the positioning accuracy can be improved.

In a possible implementation, the method further includes:

when a measurement stop condition is satisfied, stopping measurement of the cell indicated by the cell information.

The measurement stop condition includes any one of the following: A positioning request is sent, measurement time is greater than a first threshold, or a quantity of target cells is greater than a second threshold.

In this embodiment of this application, a possible specific implementation of the measurement stop condition is provided. Specifically, when the measurement stop condition is satisfied, measurement of the cell indicated by the cell information is stopped. In this case, positioning is performed based on the target cell obtained through measurement. The measurement stop condition includes but is not limited to the following: The terminal device sends the positioning request to the first network device, time in which the terminal device performs cell measurement is greater than the first threshold, or the quantity of target cells determined by the terminal device is greater than the second threshold. This embodiment of this application provides technical content of stopping cell measurement by the terminal device in the positioning scenario. According to the cell measurement method in this embodiment of this application, when the corresponding measurement stop condition is satisfied, measurement of the cell indicated by cell information can be stopped in time, to save measurement resources and obtain the target cell that satisfies the positioning requirement, and the positioning request is performed based on the target cell obtained through measurement, so that the positioning accuracy can be improved.

In a possible implementation,

the first threshold and/or the second threshold are/is carried in a broadcast message or an RRC message; or
the first threshold and/or the second threshold are/is preconfigured values/a preconfigured value; or
the first threshold and/or the second threshold are/is specified in a protocol.

In this embodiment of this application, several possible specific implementations of obtaining the first threshold and/or the second threshold are provided. Specifically, the first threshold and/or the second threshold may be configured by the network side by using dedicated signaling such as the broadcast message or the RRC message, and the terminal device obtains the first threshold and/or the second threshold by receiving the broadcast message or the RRC message from the network side. Alternatively, the first threshold and/or the second threshold may be preconfigured by the terminal device, and the terminal device obtains the first threshold and/or the second threshold by reading configuration information such as a configuration list. Alternatively, the first threshold and/or the second threshold may be specified in the protocol, and the terminal device obtains the first threshold and/or the second threshold by reading protocol content. This is not limited in embodiments of this application. In this embodiment of this application, the first threshold and/or the second threshold for determining the cell measurement stop condition may be obtained, and when the corresponding measurement stop condition is satisfied, measurement of the cell indicated by the cell information can be stopped in time, to save the measurement resources and obtain the target cell that satisfies the positioning requirement, and the positioning request is performed based on the target cell obtained through measurement, so that the positioning accuracy can be improved.

In a possible implementation,

measurement periodicity information of the cell indicated by the cell information is carried in a broadcast message or an RRC message; or
measurement periodicity information of the cell indicated by the cell information is preconfigured information; or
measurement periodicity information of the cell indicated by the cell information is specified in a protocol.

In this embodiment of this application, several possible specific implementations of obtaining the measurement periodicity information are provided. Specifically, the measurement periodicity information may be configured by the network side by using a broadcast message or dedicated signaling such as an RRC message, and the terminal device obtains the measurement periodicity information by receiving the broadcast message or the RRC message from the network side, to periodically measure the cell indicated by the cell information. Alternatively, the measurement periodicity information may be preconfigured by the terminal device, and the terminal device obtains the measurement periodicity information by reading configuration information such as a configuration list, to periodically measure the cell indicated by the cell information. Alternatively, the measurement periodicity information may be specified in the protocol, and the terminal device obtains the measurement periodicity information by reading protocol content, to periodically measure the cell indicated by the cell information. This is not limited in embodiments of this application. This embodiment of this application provides technical content of a cell measurement periodicity of the terminal device in the positioning scenario. According to the cell measurement method in this embodiment of this application, the cell indicated by cell information may be periodically measured, to obtain the target cell that satisfies the positioning requirement, and the positioning request is performed based on the target cell obtained through measurement, so that the positioning accuracy can be improved.

According to a second aspect, an embodiment of this application provides a communication method. The method includes:

A first network device receives a positioning request from a terminal device, where the positioning request includes information about at least one target cell, the at least one target cell is determined based on a measurement result obtained by measuring at least one cell indicated by cell information, and the positioning request is for requesting to position the terminal device.

The first network device sends the positioning request to a second network device.

In a possible implementation, the measurement result is obtained by measuring, in descending order of frequency priorities and/or cell priorities, the at least one cell indicated by the cell information.

In a possible implementation, when cells indicated by the cell information include a plurality of cells with a same frequency priority, the measurement result is obtained by measuring the plurality of cells with the same frequency priority in descending order of cell priorities.

In a possible implementation, the target cell is determined based on a first cell whose signal received power is greater than a power threshold or whose signal received quality is greater than a quality threshold, where the first cell is a cell that has been measured, that supports positioning, and that is in the cells indicated by the cell information.

In a possible implementation, the target cell is determined based on the first N second cells in descending order of R criteria or cell signal received powers, where the second cell is a cell that has been measured, that supports positioning, and that is in the cells indicated by the cell information.

In a possible implementation, the method further includes:

The first network device sends a broadcast message or a radio resource control RRC message to the terminal device, where the broadcast message or the RRC message indicates the cell information.

In a possible implementation, the method further includes:

The first network device sends a broadcast message or a radio resource control RRC message to the terminal device, where the broadcast message or the RRC message indicates the cell priority and/or the frequency priority.

In a possible implementation, the method further includes:

The first network device sends a broadcast message or a radio resource control RRC message to the terminal device, where the broadcast message or the RRC message indicates measurement periodicity information, and the measurement periodicity information includes periodicity information for measuring the cell indicated by the cell information.

According to a third aspect, an embodiment of this application provides a communication apparatus. The apparatus includes a module or a unit configured to perform the method in either of the first aspect and the second aspect.

In a possible design, the apparatus includes:

a processing unit, configured to obtain cell information, where
the processing unit is further configured to measure at least one cell indicated by the cell information, to obtain a measurement result; and

the processing unit is further configured to determine at least one target cell based on the measurement result; and
a transceiver unit, configured to send a positioning request to a first network device, where the positioning request includes information about the at least one target cell.

In a possible implementation, the processing unit is specifically configured to measure, in descending order of frequency priorities and/or cell priorities, the at least one cell indicated by the cell information.

In a possible implementation, the processing unit is specifically configured to: when cells indicated by the cell information include a plurality of cells with a same frequency priority, measure the plurality of cells with the same frequency priority in descending order of cell priorities.

In a possible implementation, the processing unit is specifically configured to: when both first measurement and second measurement exist, preferentially perform the first measurement, where the first measurement includes measuring, in a positioning scenario, the at least one cell indicated by the cell information, and the second measurement includes measuring a found cell in a scenario of cell selection or cell reselection.

In a possible implementation, the processing unit is specifically configured to: when a signal received power of a first cell is greater than a power threshold, or signal received quality is greater than a quality threshold, determine the first cell as the target cell, where the first cell is a cell that has been measured, that supports positioning, and that is in the cells indicated by the cell information.

In a possible implementation, the processing unit is specifically configured to determine the first N second cells as the target cells in descending order of R criteria or cell signal received powers, where the second cell is a cell that has been measured, that supports positioning, and that is in the cells indicated by the cell information.

In a possible implementation, the cell information is carried in either of the following messages: a broadcast message and a radio resource control RRC message; or
the cell information is preconfigured information.

In a possible implementation, information about the cell priority and/or the frequency priority is carried in a broadcast message or an RRC message; or
information about the cell priority and/or the frequency priority is preconfigured information.

In a possible implementation, the processing unit is specifically configured to obtain a measurement indication, where the measurement indication indicates to measure the at least one cell indicated by the cell information; and
the processing unit is specifically configured to measure the at least one cell indicated by the cell information.

In a possible implementation, the processing unit is specifically configured to: when a higher layer detects a positioning event or a positioning indication, receive the measurement indication from the higher layer.

In a possible implementation, the processing unit is specifically configured to: when a measurement stop condition is satisfied, stop measurement of the cell indicated by the cell information.

The measurement stop condition includes any one of the following: A positioning request is sent, measurement time is greater than a first threshold, or a quantity of target cells is greater than a second threshold.

In a possible implementation, the first threshold and/or the second threshold are/is carried in a broadcast message or an RRC message; or

the first threshold and/or the second threshold are/is preconfigured values/a preconfigured value; or
the first threshold and/or the second threshold are/is specified in a protocol.

In a possible implementation, measurement periodicity information of the cell indicated by the cell information is carried in a broadcast message or an RRC message; or

measurement periodicity information of the cell indicated by the cell information is preconfigured information; or
measurement periodicity information of the cell indicated by the cell information is specified in a protocol.

In another possible design, the communication apparatus includes:

a transceiver unit, configured to receive a positioning request from a terminal device, where the positioning request includes information about at least one target cell, the at least one target cell is determined based on a measurement result obtained by measuring at least one cell indicated by cell information, and the positioning request is for requesting to position the terminal device, where
the transceiver unit is further configured to send the positioning request to a second network device.

In a possible implementation, the measurement result is obtained by measuring, in descending order of frequency priorities and/or cell priorities, the at least one cell indicated by the cell information.

In a possible implementation, when cells indicated by the cell information include a plurality of cells with a same frequency priority, the measurement result is obtained by measuring the plurality of cells with the same frequency priority in descending order of cell priorities.

In a possible implementation, the target cell is determined based on a first cell whose signal received power is greater than a power threshold or whose signal received quality is greater than a quality threshold, where the first cell is a cell that has been measured, that supports positioning, and that is in the cells indicated by the cell information.

In a possible implementation, the target cell is determined based on the first N second cells in descending order of R criteria or cell signal received powers, where the second cell is a cell that has been measured, that supports positioning, and that is in the cells indicated by the cell information.

In a possible implementation, the transceiver unit is further configured to send a broadcast message or a radio resource control RRC message to the terminal device, where the broadcast message or the RRC message indicates the cell information.

In a possible implementation, the transceiver unit is further configured to send a broadcast message or a radio resource control RRC message to the terminal device, where the broadcast message or the RRC message indicates the cell priority and/or the frequency priority.

In a possible implementation, the transceiver unit is further configured to send a broadcast message or a radio resource control RRC message to the terminal device, where the broadcast message or the RRC message indicates measurement periodicity information, and the measurement periodicity information includes periodicity information for measuring the cell indicated by the cell information.

For technical effects achieved by the third aspect or any one of the possible implementations, refer to descriptions of the technical effects corresponding to either of the first aspect and the second aspect and corresponding implementations.

According to a fourth aspect, an embodiment of this application provides a communication apparatus, including a processor. The processor is coupled to a memory, and may be configured to execute instructions in the memory, to implement the method in either of the first aspect and the second aspect and any one of the possible implementations. Optionally, the communication apparatus further includes the memory. Optionally, the communication apparatus further includes a communication interface, and the processor is coupled to the communication interface.

According to a fifth aspect, an embodiment of this application provides a communication apparatus, including a logic circuit and a communication interface. The communication interface is configured to receive information or send information. The logic circuit is configured to receive information or send information through the communication interface, so that the communication apparatus performs the method in either of the first aspect and the second aspect and any one of the possible implementations.

According to a sixth aspect, an embodiment of this application provides a computer-readable storage medium. The computer-readable storage medium is configured to store a computer program (which may also be referred to as code or instructions). When the computer program is run on a computer, the method in either of the first aspect and the second aspect and any one of the possible implementations is implemented.

According to a seventh aspect, an embodiment of this application provides a computer program product. The computer program product includes a computer program (which may also be referred to as code or instructions). When the computer program is run, a computer is enabled to perform the method in either of the first aspect and the second aspect and any one of the possible implementations.

According to an eighth aspect, an embodiment of this application provides a chip. The chip includes a processor, the processor is configured to execute instructions, and when the processor executes the instructions, the chip is enabled to perform the method in either of the first aspect and the second aspect and any one of the possible implementations. Optionally, the chip further includes a communication interface, and the communication interface is configured to receive a signal or send a signal.

According to a ninth aspect, an embodiment of this application provides a communication system. The communication system includes at least one of the communication apparatus in the third aspect, the communication apparatus in the fourth aspect, the communication apparatus in the fifth aspect, or the chip in the eighth aspect.

In addition, in a process of performing the method in either of the first aspect and the second aspect and any one of the possible implementations, a process related to sending information and/or receiving information or the like in the method may be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or a communication interface or a sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmission, sending, and receiving related to the processor may be more generally understood as operations such as output, receiving, and input of the processor, unless otherwise specified, or provided that the operations do not contradict actual functions or internal logic of the operations in related descriptions.

Optionally, in a process of performing the method in either of the first aspect and the second aspect and any one of the possible implementations, the processor may be a processor specially configured to perform the method, or may be a processor that performs the method by executing computer instructions in a memory, for example, a general-purpose processor. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

In a possible implementation, the at least one memory is located outside an apparatus.

In another possible implementation, the at least one memory is located in an apparatus.

In still another possible implementation, some memories in the at least one memory are located in an apparatus, and the other memories are located outside the apparatus.

In this application, the processor and the memory may alternatively be integrated into one component. In other words, the processor and the memory may alternatively be integrated together.

This embodiment of this application provides the technical content of how the terminal device should perform cell measurement in the positioning scenario in the idle state or the inactive state. According to the cell measurement method in this embodiment of this application, the target cell that satisfies the positioning requirement can be obtained, and the positioning request is performed based on the target cell obtained through measurement, so that the positioning accuracy can be improved.

## BRIEF DESCRIPTION OF DRAWINGS

To describe technical solutions in embodiments of this application more clearly, the following briefly describes the accompanying drawings for describing embodiments of this application. It is clear that the accompanying drawings in the following descriptions show merely some embodiments of this application, and a person of ordinary skill in the art may derive other drawings from these accompanying drawings without creative efforts.

FIG. 1 is a diagram of a communication system according to an embodiment of this application;
FIG. 2 is a diagram of a positioning architecture based on a wireless communication system according to an embodiment of this application;
FIG. 3 is a diagram of state switching of a terminal device according to an embodiment of this application;
FIG. 4 is a schematic flowchart of RRC connection resumption of a terminal device according to an embodiment of this application;
FIG. 5 is a schematic flowchart of a positioning-based communication method according to an embodiment of this application;
FIG. 6 is a schematic flowchart of a cell measurement method according to an embodiment of this application;
FIG. 7 is a diagram of a structure of a communication apparatus according to an embodiment of this application;
FIG. 8 is a diagram of a structure of a communication apparatus according to an embodiment of this application; and
FIG. 9 is a diagram of a structure of a chip according to an embodiment of this application.

## DESCRIPTION OF EMBODIMENTS

To make objectives, the technical solutions, and advantages of this application clearer, the following describes embodiments of this application with reference to the accompanying drawings in embodiments of this application.

The terms "first", "second", and the like in the specification, the claims, and the accompanying drawings of this application are used to distinguish between different objects, but are not used to describe a specific sequence. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned in the specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. A person skilled in the art may explicitly and implicitly understand that, in embodiments of this application, unless otherwise specified or a logical conflict occurs, terms and/or descriptions in embodiments are consistent and may be referenced by each other, and technical features in different embodiments may be combined to form a new embodiment based on an internal logical relationship.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

A method provided in this application may be applied to various communication systems, for example, an internet of things (internet of things, IoT) system, a narrowband internet of things (narrowband internet of things, NB-IoT) system, a long term evolution (long term evolution, LTE) system, a 5th generation (5th generation, 5G) communication system, and a new communication system (for example, 6G) emerging in future communication development.

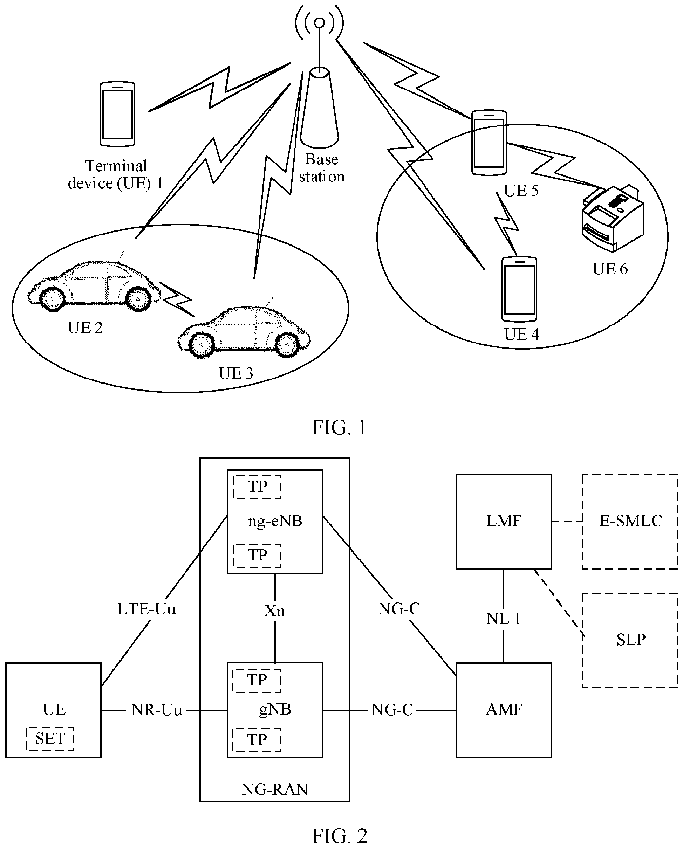

The technical solutions provided in this application may be further applied to machine type communication (machine type communication, MTC), a long term evolution-machine (long term evolution-machine, LTE-M) technology, and a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle-to-everything (vehicle-to-everything, V2X, where X may represent anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication. For example, in FIG. 1 or FIG. 2 shown below, terminal devices may communicate with each other by using a D2D technology, an M2M technology, or a V2X technology.

FIG. 1 is a diagram of a communication system according to an embodiment of this application.

As shown in FIG. 1, the communication system may include at least one access network device and at least one terminal device.

The access network device and the terminal device are separately described as follows.

For example, the access network device may be a next-generation NodeB (next-generation NodeB, gNB), a next-generation evolved NodeB (next-generation evolved NodeB, ng-eNB), or an access network device in future 6G communication. The access network device may be any device having a wireless transceiver function and includes but is not limited to the base station shown above. The base station may alternatively be a base station in a future communication system such as a 6th generation communication system. Optionally, the access network device may be an access node, a wireless relay node, a wireless backhaul node, or the like in a wireless local area network (wireless fidelity, Wi-Fi) system. Optionally, the access network device may be a radio controller in a cloud radio access network (cloud radio access network, CRAN) scenario. Optionally, the access network device may be a wearable device, a vehicle-mounted device, or the like. Optionally, the access network device may be a small cell, a transmission reception point (transmission reception point, TRP) (which may also be referred to as a transmission point), or the like. It may be understood that the access network device may alternatively be a base station or the like in a future evolved public land mobile network (public land mobile network, PLMN).

In some deployments, the base station (for example, the gNB) may include a central unit (central unit, CU) and a distributed unit (distributed unit, DU). To be specific, functions of a base station in an access network are divided, some functions of the base station are deployed on a CU, and remaining functions are deployed on a DU. In addition, a plurality of DUs share one CU, so that costs can be reduced, and network expansion can be prone to implement. In some other deployments of the base station, the CU may be further divided into a CU-control plane (control plane, CP), a CU-user plane (user plane, UP), and the like. In still some other deployments of the base station, the base station may alternatively be an open radio access network (open radio access network, ORAN) architecture or the like. A specific type of the base station is not limited in this application.

For ease of description, the following describes the method in this application by using an example in which the access network device is a base station.

For example, the terminal device may also be referred to as a user equipment (user equipment, UE), or a terminal. The terminal device is a device having a wireless transceiver function, and may be deployed on land, including an indoor or outdoor device, or a handheld, wearable, or vehicle-mounted device; may be deployed on water, for example, on a ship; or may be deployed in air, for example, on an aircraft, a balloon, or a satellite. The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home, or the like. It may be understood that the terminal device may alternatively be a terminal device in a future 6G network, a terminal device in a future evolved PLMN, or the like.

It may be understood that the terminal device shown in this application may not only include a vehicle (for example, an entire vehicle) in the internet of vehicles, but also include a vehicle-mounted device, a vehicle-mounted terminal, or the like in the internet of vehicles. A specific form of the terminal device when the terminal device is used in the internet of vehicles is not limited in this application.

For ease of description, the following describes the method in this application by using an example in which the terminal device is a UE.

The communication system shown in FIG. 1 includes one base station and six UEs, for example, a UE 1 to a UE 6 in FIG. 1. In the communication system, the base station may send a downlink signal such as configuration information or downlink control information (downlink control information, DCI) to the UE 1 to the UE 6, and the UE 1 to the UE 6 may send uplink signals such as SRSs or physical uplink shared channels (physical uplink shared channels, PUSCHs) to the base station. It may be understood that, for a manner of communication between the UEs, refer to the foregoing descriptions. Details are not described herein again.

It should be understood that FIG. 1 shows an example of one base station, six UEs, and communication links between communication devices. Optionally, the communication system may include a plurality of base stations, and a coverage area of each base station may include another quantity of UEs, for example, more or fewer UEs. This is not limited in this application.

A plurality of antennas may be configured for the foregoing communication devices, for example, the base station and the UE 1 to the UE 6 in FIG. 1. The plurality of antennas may include at least one transmit antenna configured to send a signal, at least one receive antenna configured to receive a signal, and the like. A specific structure of each communication device is not limited in embodiments of this application. Optionally, the communication system may further include another network entity such as a network controller or a mobility management entity. This is not limited in embodiments of this application.

It may be understood that the method provided in this application may be applied to not only the communication system shown in FIG. 1 but also a communication system shown in FIG. 2.

FIG. 2 is a diagram of a positioning architecture based on a wireless communication system according to an embodiment of this application.

As shown in FIG. 2, the positioning architecture mainly includes three parts: a radio access network (radio access network, RAN) (where as shown in FIG. 1, a next-generation RAN (next-generation RAN, NG-RAN) is used as an example), a UE, and a core network.

The radio access network, the UE, and the core network are separately described as follows.

For example, the core network includes a location management function (location management function, LMF), an access and mobility management function (access and mobility management function, AMF), a service location protocol (service location protocol, SLP), and an evolved serving mobile location center (evolved serving mobile location center, E-SMLC).

For example, the LMF is responsible for supporting different types of UE-related location services, including positioning the UE, transferring assistance data to the UE, and the like. For example, the LMF interacts with a base station by using a new radio (new radio, NR) positioning protocol annex (NR positioning protocol annex, NRPPa) message, to obtain configuration information of a positioning reference signal (positioning reference signal, PRS) and a sounding reference signal (sounding reference signal, SRS), cell timing, cell location information, and the like. For another example, UE capability information, assistance information, measurement information, and the like are transferred between the LMF and the UE by using a long term evolution (long term evolution, LTE) positioning protocol (LTE positioning protocol, LPP) message.

For example, the AMF may receive a UE-related location service request from a 5th generation core network location service (5th generation core network location service, 5GC LCS) entity, or the AMF may start some location services on behalf of the UE, and send a location service request to the LMF. After obtaining location information of the UE, the AMF returns the location information of the UE to the 5GC LCS entity.

For example, the RAN includes a base station. As shown in FIG. 2, a gNB and a ng-eNB may be connected through an Xn interface (or an Xn-C interface), the LMF and the ng-eNB/gNB may be connected through an NG-C interface, the UE may be connected to the gNB through an NR-Uu interface, and the UE may be connected to the ng-eNB through an LTE-Uu interface. It may be understood that the interfaces shown in FIG. 2 are not limited in this application. For descriptions of the interfaces, refer to a related standard, a protocol, or the like.

It may be understood that the diagram of the positioning architecture shown in FIG. 2 is merely an example. For a diagram of a positioning architecture in another form, refer to a related standard, protocol, or the like. Details are not described herein.

Embodiments shown below are applicable to the communication system shown in FIG. 1, or are applicable to the communication system shown in FIG. 2. Details are not described below again.

Before the method in this application is described in detail, some concepts in this application are first briefly described.

1. Radio resource control (radio resource control, RRC) state and switching process

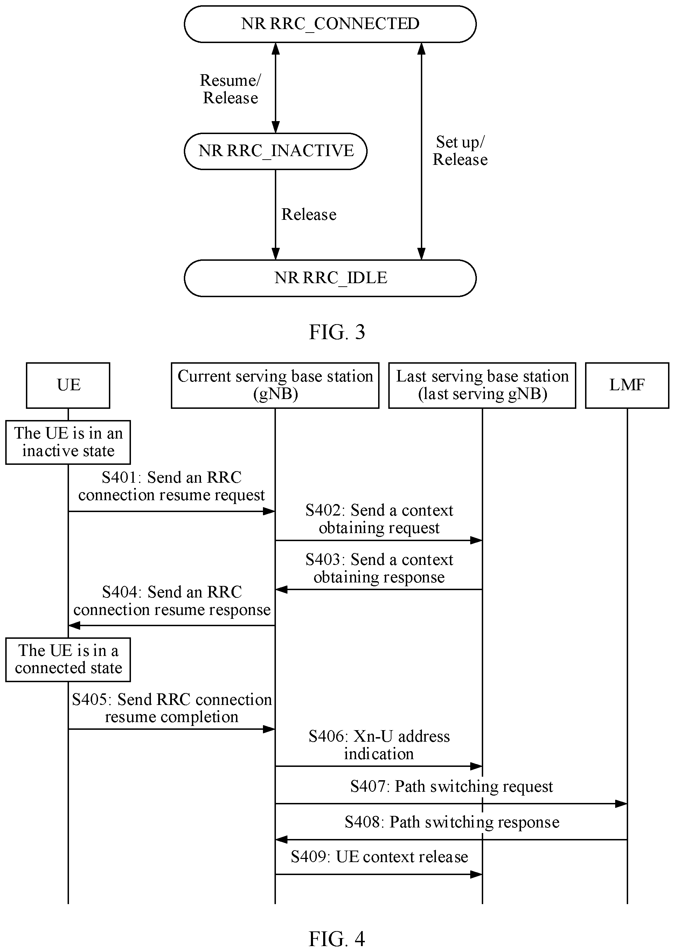

FIG. 3 is a diagram of state switching of a terminal device according to an embodiment of this application.

FIG. 3 shows a radio resource control (radio resource control, RRC) state and a switching process between states. A new RRC state, namely, RRC_INACTIVE (a radio resource control-inactive state) is introduced into new radio (new radio, NR), and a switching relationship between RRC_INACTIVE and RRC_CONNECTED (a radio resource control-connected state) and RRC_IDLE (a radio resource control-idle state) is shown in FIG. 3.

RRC_INACTIVE (the radio resource control-inactive state) can be switched only from RRC_CONNECTED (the radio resource control-connected state) by using an RRC release (release) message. When a UE is released from the RRC_CONNECTED state to RRC_INACTIVE, a base station allocates an identifier, namely, an I-RNTI (inactive radio network temporary identifier) to the UE, and stores a context of the UE by using the identifier. The base station is also referred to as a last serving gNB (last serving gNB) of the UE, and is sometimes denoted as an anchor gNB (anchor gNB).

When the UE requests to resume a previously suspended RRC connection or update a radio notification area (radio notification area, RNA), the UE sends an RRCResumeRequest message to a current serving base station. A structure of the RRCResumeRequest message includes a resume cause value, and the resume cause value indicates a resume cause why the RRCResumeRequest message requests resumption. The structure of the RRCResumeRequest message further includes the I_RNTI identifier. The current serving base station retrieves the context of the UE from the last serving gNB based on the I_RNTI identifier.

For a specific procedure, refer to FIG. 4. FIG. 4 is a schematic flowchart of RRC connection resumption of a terminal device according to an embodiment of this application. The following describes each step in FIG. 4.

S401: A UE sends an RRC connection resume request RRCResumeRequst to a gNB, where RRCResumeRequst includes an I-RNTI allocated by a last serving gNB to the UE.

S402: The gNB receives RRCResumeRequst, and may find the last serving gNB based on a gNB identity included in the I-RNTI, and request the last serving gNB to provide a context of the UE.

Specifically, the gNB sends a context obtaining request Retrieve UE context request message to the corresponding last serving gNB.

S403: The last serving gNB provides the context of the UE for the gNB.

Specifically, the last serving gNB sends a context obtaining response Retrieve UE context response message to the gNB, where the context obtaining response message includes the context of the UE.

S404/S405: The gNB and the UE complete RRC connection resumption, and may send user data when obtaining a grant grant.

S406: If lossless downlink (downlink, DL) user data buffered in the last serving gNB is required, the gNB needs to provide a forwarding address.

S407/S408: The gNB performs path switching.

S409: The gNB triggers resource release of the UE at the last serving gNB.

It should be noted that, when the context of the UE cannot be retrieved, the gNB may send an RRCSetup message to the UE, to set up an RRC connection again, or the gNB may directly send an RRCReject message to the UE, to reject a setup request of the UE.

2. Cell selection

When a terminal device accesses a network for the first time, for example, when the terminal device is powered on, exits a radio resource control (radio resource control, RRC) connected state (connected state), enters a network coverage area, or encounters a radio link failure (radio link failure, RLF), the terminal device needs to select a cell to camp on or perform RRC re-setup. This process is referred to as cell selection (cell selection).

For example, in the cell selection process, the terminal device may perform cell search on a plurality of frequencies. For example, the terminal device may search for a cell with highest signal strength on each frequency. If the terminal device finds a cell that satisfies a cell selection criterion, the terminal device selects the cell to camp on. For example, the plurality of frequencies may be frequencies, configured by the terminal device, at which cells in a mobile network are located. For example, the plurality of frequencies may be configured in a SIM (subscriber identity module) card.

For example, the cell selection criterion includes an S criterion. The S criterion includes: S1>0 and S2>0.

For example, S1 may be denoted as Srxlev, and represents a cell selection receive level value of the cell. S2 may be denoted as Squal, and represents a cell selection quality value of the cell. S1 and S2 satisfy the following formula:

$$S1 = Q1 - (Q_{rxlevmin} + Q_{rxlevminoffset}) - P_{compensation} - Q_{offsettemp};$$

and

$$S2 = Q2 - (Q_{qualmin} + Q_{qualminoffset}) - Q_{offsettemp}.$$

Q1 is a reference signal received power (reference signal received power, RSRP) of a broadcast message (for example, an SSB or SI) of the cell, $Q_{rxlevmin}$ represents a minimum RSRP required for camping on the cell, $Q_{rxlevminoffset}$ represents an offset of $Q_{rxlevmin}$, $P_{compensation}$ represents a power compensation value, and $Q_{offsettemp}$ represents a temporary offset. Q2 is reference signal received quality (reference signal received quality, RSRQ) of the cell, $Q_{qualmin}$ represents minimum RSRQ required for camping on the cell, and $Q_{qualminoffset}$ represents an offset of $Q_{qualmin}$.

For example, Q1 and Q2 may be obtained by the terminal device by measuring signal strength of the received broadcast message (for example, the SSB or the SI) of the cell. The parameters Qrxlevmin, $Q_{rxlevminoffset}$, Qqualmin, Qqualminoffset, $P_{compensation}$, and $Q_{offsettemp}$ may be included in the system information of the cell or may be derived from parameters in the system information of the cell. For ease of description, $Q_{rxlevmin}$, $Q_{rxlevminoffset}$, Qqualmin, Qqualminoffset, $P_{compensation}$, and $Q_{offsettemp}$ are referred to as cell selection parameters in embodiments of this application.

For example, the cell selection criterion further includes a network homing criterion. The network homing criterion includes: A network to which a cell belongs is any one of a selected network (selected network), a registered network (registered network), or an equivalent network (equivalent network) of the terminal device.

For example, the cell selection criterion further includes a cell availability criterion. The cell availability criterion includes: A cell is not barred (barred) or reserved (reserved), and the cell is not in a tracking area included in a list of forbidden tracking areas for roaming (forbidden tracking areas for roaming).

It should be noted that the cell selection criterion is merely an example. With evolution of a standard technology, the cell selection criterion may change. In this case, the cell selection criterion is also applicable to the method provided in embodiments of this application. Therefore, the cell selection criterion described above should not be understood as a limitation on an implementation of this application.

3. Cell reselection

A terminal device in an RRC idle state (idle state) and an RRC inactive state (inactive state) may reselect another cell to camp on. This process is referred to as cell reselection (cell reselection). In the cell reselection process, the terminal device first measures neighboring cells of a serving cell; and if a neighboring cell that satisfies a cell reselection criterion is obtained through measurement, the terminal device reselects the neighboring cell.

For example, the cell reselection may include intra-frequency cell reselection (intra-frequency cell reselection) and inter-frequency cell reselection (inter-frequency cell reselection). The intra-frequency cell reselection means that the terminal device reselects a neighboring cell that has a same frequency as the serving cell (serving cell). The inter-frequency cell reselection means that the terminal device reselects a neighboring cell that has a different frequency from the serving cell. The serving cell is a cell on which the terminal device currently camps. Based on priorities of the frequencies of the serving cell and the neighboring cells, the inter-frequency cell reselection is further classified into equal-priority inter-frequency cell reselection, low-priority inter-frequency cell reselection, and high-priority inter-frequency cell reselection. The equal-priority inter-frequency cell reselection means that an inter-frequency neighboring cell whose frequency priority is equal to that of the serving cell is reselected. The low-priority inter-frequency cell reselection means that an inter-frequency neighboring cell whose frequency priority is lower than that of the serving cell is reselected. The high-priority inter-frequency cell reselection means that an inter-frequency neighboring cell whose frequency priority is higher than that of the serving cell is reselected. For example, the foregoing frequency priorities are configured by a network device.

(1) Intra-frequency cell reselection

For example, when signal strength of a serving cell of a terminal device satisfies $S1 \le S1_{intra}$ or $S2 \le S2_{intra}$, the terminal device performs intra-frequency neighboring cell measurement. For calculation formulas of S1 and S2, refer to related descriptions in the foregoing cell selection. $S1_{intra}$ and $S2_{intra}$ are respectively a threshold of S1 and a threshold of S2. When S1 of the serving cell is less than the threshold $S1_{intra}$ or S2 of the serving cell is less than or equal to the threshold $S2_{intra}$, the terminal device performs intra-frequency neighboring cell measurement, to reselect an intra-frequency neighboring cell. For example, $S1_{intra}$ and $S2_{intra}$ may be included in system information of the serving cell. The terminal device receives the system information broadcast in the serving cell, and obtains $S1_{intra}$ and $S2_{intra}$ from the system information of the serving cell.

For example, the terminal device measures each intra-frequency neighboring cell of the serving cell. The terminal device obtains an intra-frequency neighboring cell through measurement, in other words, receives a broadcast message, for example, an SSB or SI, of the intra-frequency neighboring cell. The terminal device first determines whether signal strength of the intra-frequency neighboring cell satisfies an S criterion. For the S criterion, refer to related descriptions in the foregoing cell selection. If the intra-frequency neighboring cell satisfies the S criterion, the terminal device calculates a value of R of the intra-frequency neighboring cell. The value of R of the intra-frequency neighboring cell satisfies the following formula:

$$R = Qn - Q_{offset} - Q_{offsettemp,n} .$$

Qn is an RSRP of the broadcast message (for example, the SSB or the SI) of the intra-frequency neighboring cell, $Q_{offset}$ is an offset of the intra-frequency neighboring cell relative to the serving cell, and $Q_{offsettemp,n}$ is an offset of the intra-frequency neighboring cell. $Q_{offset}$ and $Q_{offsettemp,n}$ are included in the system information of the serving cell.

For example, the terminal device obtains, through measurement, at least one intra-frequency neighboring cell that satisfies the S criterion, and calculates a value of R of the at least one intra-frequency neighboring cell. If a value of R of a first intra-frequency neighboring cell remains greater than a value of R of the serving cell and the first intra-frequency neighboring cell satisfies a network homing criterion and a cell availability criterion within a specified time interval, the terminal device determines to reselect the first intra-frequency neighboring cell. The first intra-frequency neighboring cell is an intra-frequency neighboring cell with a largest value of R in the at least one intra-frequency neighboring cell. For example, the specified time interval may be specified in a protocol, or may be configured by the network device.

For example, the value of R of the serving cell satisfies the following formula:

$$R = Qs + Q_{hyst} - Q_{offsteeemp,s} .$$

Qs is an RSRP of a broadcast message (for example, an SSB or SI) of the serving cell, $Q_{hyst}$ is hysteresis (hysteresis) of the serving cell, and $Q_{offsettemp,s}$ is an offset of the serving cell. For example, two parameters $Q_{hyst}$ and $Q_{offsettemp,s}$ are included in the system information of the serving cell, and Qs may be obtained by measuring signal strength of the SSB broadcast in the serving cell. For ease of description, in embodiments of this application, $Q_{offset}$, $Q_{offsettemp,n}$, $Q_{hyst}$, and $Q_{offsettemp,s}$ may be referred to as cell reselection parameters.

For example, the value of R of the cell may represent a cell reselection priority of the cell.

(2) Equal-priority inter-frequency cell reselection

For example, when signal strength of a serving cell satisfies $S1 \leq S1_{non-intra}$ or $S2 \leq S2_{non-intra}$, a terminal device performs equal-priority inter-frequency neighboring cell measurement. For S1 and S2, refer to related descriptions in the foregoing cell selection. $S1_{non-intra}$ and $S2_{non-intra}$ are respectively a threshold of S1 and a threshold of S2. When S1 of the serving cell is less than the threshold $S1_{non-intra}$ or S2 of the serving cell is less than or equal to the threshold $S2_{non-intra}$, the terminal device performs equal-priority inter-frequency neighboring cell measurement, to reselect an equal-priority inter-frequency neighboring cell. For example, $S1_{non-intra}$ and $S2_{non-intra}$ are included in system information of the serving cell. The terminal device receives the system information broadcast in the serving cell, and obtains $S1_{non-intra}$ and $S2_{non-intra}$ from the system information.

For example, the terminal device measures each equal-priority inter-frequency neighboring cell of the serving cell. If a measured equal-priority inter-frequency neighboring cell satisfies an S criterion, the terminal device calculates a value of R of the equal-priority inter-frequency neighboring cell. For calculation of the value of R of the equal-priority inter-frequency neighboring cell, refer to related descriptions of the value of R of the intra-frequency neighboring cell in the foregoing intra-frequency cell reselection.

For example, the terminal device obtains, through measurement, at least one equal-priority inter-frequency neighboring cell that satisfies the S criterion, and calculates a value of R of the at least one equal-priority inter-frequency neighboring cell. If a value of R of a first equal-priority inter-frequency neighboring cell remains greater than the value of R of the serving cell and the first equal-priority inter-frequency neighboring cell satisfies a network homing criterion and a cell availability criterion within a specified time interval, the terminal device determines to reselect the first equal-priority inter-frequency neighboring cell. The first equal-priority inter-frequency neighboring cell is an equal-priority inter-frequency neighboring cell with a largest value of R in the at least one equal-priority inter-frequency neighboring cell. For calculation of the value of R of the serving cell, refer to related descriptions of the value of R of the serving cell in the foregoing intra-frequency cell reselection.

(3) Low-priority inter-frequency neighboring cell reselection

For example, when signal strength of a serving cell satisfies $S1 \leq S1_{non-intra}$ or $S2 \leq S2_{non-intra}$, a terminal device performs low-priority inter-frequency neighboring cell measurement. For S1 and S2, refer to related descriptions in the foregoing cell selection. $S1_{non-intra}$ and $S2_{non-intra}$ are respectively a threshold of S1 and a threshold of S2. When S1 of the serving cell is less than the threshold $S1_{non-intra}$ or S2 of the serving cell is less than or equal to the threshold $S2_{non-intra}$, the terminal device performs low-priority inter-frequency neighboring cell measurement, to reselect a low-priority inter-frequency neighboring cell. For example, $S1_{non-intra}$ and $S2_{non-intra}$ are included in system information of the serving cell. The terminal device receives the system information broadcast in the serving cell, and obtains $S1_{non-intra}$ and $S2_{non-intra}$ from the system information.

For example, the terminal device measures a first low-priority inter-frequency neighboring cell. The first low-priority inter-frequency neighboring cell is any one of at least one low-priority inter-frequency neighboring cell of the serving cell. When the first low-priority inter-frequency neighboring cell satisfies an S criterion, a network homing criterion, and a cell availability criterion, if the first low-priority inter-frequency neighboring cell satisfies one or more items in a low-priority inter-frequency neighboring cell reselection condition, the terminal device determines to reselect the first low-priority inter-frequency neighboring cell. The low-priority inter-frequency neighboring cell reselection condition includes the following conditions:

Condition 1: S1 of the serving cell is less than $Th_{s,low,p}$, and for the first low-priority inter-frequency neighboring cell, S1 remains greater than $Th_{x,low,p}$ within a specified time interval.
Condition 2: S2 of the serving cell is less than $Th_{s,low,q}$, and for the first low-priority inter-frequency neighboring cell, S2 remains greater than $Th_{x,low,q}$ within a specified time interval.

$Th_{s,low,p}$, $Th_{x,low,p}$, $Th_{s,low,q}$, and $Th_{x,low,q}$ represent thresholds, and these parameters are included in the system information of the serving cell. When the first low-priority inter-frequency neighboring cell satisfies any item in the foregoing low-priority inter-frequency neighboring cell reselection condition, the terminal device determines to reselect the first low-priority inter-frequency neighboring cell.

It should be understood that the foregoing low-priority inter-frequency neighboring cell reselection condition is merely an example. The low-priority inter-frequency neighboring cell reselection condition in embodiments of this application is not limited to the foregoing two examples, and may further include other new low-priority inter-frequency neighboring cell reselection conditions that emerge with development of technologies. Therefore, the low-priority inter-frequency neighboring cell reselection condition described above should not be understood as a limitation on an implementation of this application.

(4) High-priority inter-frequency cell reselection

A terminal device measures a high-priority inter-frequency neighboring cell of a serving cell. For example, the terminal device may periodically measure the high-priority inter-frequency neighboring cell, to reselect a high-priority inter-frequency neighboring cell.

For example, the terminal device measures a first high-priority inter-frequency neighboring cell. The first high-priority inter-frequency neighboring cell is any one of at least one high-priority inter-frequency neighboring cell of the serving cell. When the first high-priority inter-frequency neighboring cell satisfies an S criterion, a network homing criterion, and a cell availability criterion, if the first high-priority inter-frequency neighboring cell satisfies a high-priority inter-frequency neighboring cell reselection condition, the terminal device determines to reselect the first high-priority inter-frequency neighboring cell. The high-priority inter-frequency neighboring cell reselection condition includes the following conditions:

Condition 1: For the first high-priority inter-frequency neighboring cell, S1 remains greater than $Th_{x,high,p}$ within a specified time interval.
Condition 2: For the first high-priority inter-frequency neighboring cell, S2 remains greater than $Th_{x,high,q}$ within a specified time interval.

$Th_{x,high,p}$ and $Th_{x,high,q}$ represent thresholds, and these parameters are included in system information of the serving cell. When the first high-priority inter-frequency neighboring cell satisfies any item in the foregoing high-priority inter-frequency neighboring cell reselection condition, the terminal device determines to reselect the first high-priority inter-frequency neighboring cell.

It should be understood that the foregoing high-priority inter-frequency neighboring cell reselection condition is merely an example. The high-priority inter-frequency neighboring cell reselection condition in embodiments of this application is not limited to the foregoing two examples, and may further include other new high-priority inter-frequency neighboring cell reselection conditions that emerge with development of technologies. Therefore, the high-priority inter-frequency neighboring cell reselection condition described above should not be understood as a limitation on an implementation of this application.

4. Serving cell positioning

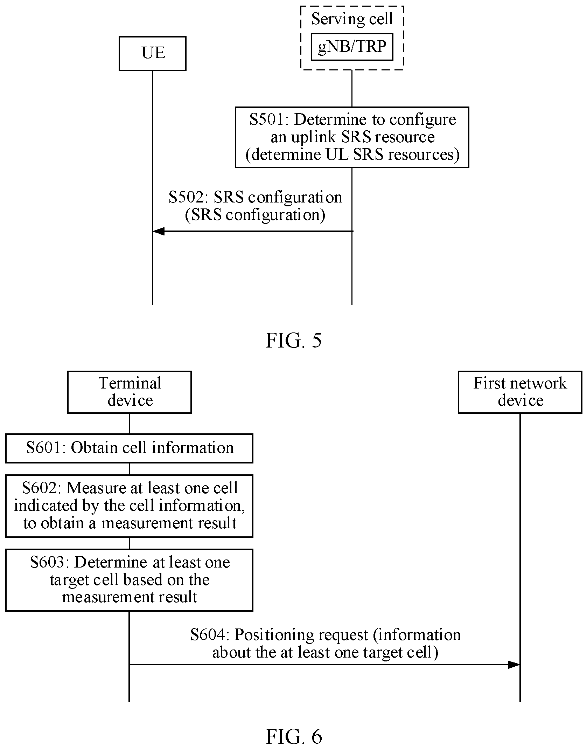

FIG. 5 is a schematic flowchart of a positioning-based communication method according to an embodiment of this application.

As shown in FIG. 5, the method includes the following steps.

S501: A serving base station determines to configure an uplink SRS resource (determines UL SRS resources).

It may be understood that, in the method shown in FIG. 5, the serving base station may be a gNB, a TRP, or the like. This is not limited in embodiments of this application.

S502: The serving base station sends a message carrying an SRS configuration (SRS configuration) to a UE. Correspondingly, the UE receives the SRS configuration. The SRS configuration includes configuration information of the uplink SRS resource determined by the serving base station for the UE.

According to the method shown in FIG. 5, the serving base station may send the SRS configuration to the UE, so that the UE can obtain the SRS configuration, and send an SRS based on the SRS configuration. The SRS is for obtaining positioning information of a terminal device through measurement.

Currently, in a positioning scenario of the terminal device in an idle state or an inactive state, a cell measurement method in a cell selection or cell reselection process is usually used to find a suitable cell for a positioning request, to implement uplink positioning. However, the cell measured by using the foregoing cell measurement method is used for uplink positioning, and positioning accuracy is low. Therefore, the cell measurement method in the positioning scenario of the terminal device in the idle state or the inactive state needs to be improved.

For the foregoing technical problem that the cell measurement method in the positioning scenario of the terminal device in the idle state or the inactive state still needs to be improved, embodiments of this application provide technical content of how the terminal device should perform cell measurement in the positioning scenario in the idle state or the inactive state. According to the cell measurement method in embodiments of this application, a target cell that satisfies a positioning requirement can be obtained, and the positioning request is performed based on the target cell obtained through measurement, so that the positioning accuracy can be improved.

FIG. 6 is a schematic flowchart of a cell measurement method according to an embodiment of this application. The cell measurement method is applied to the field of communication technologies, and the cell measurement method includes but is not limited to the following steps.

S601: Obtain cell information.

A terminal device obtains the cell information.

The cell information includes but is not limited to a cell identifier, a frequency carrier on which a cell is located, synchronization signal block (synchronization signal block, SSB) sending information of a cell, and the like. The cell identifier may be specifically a physical cell identifier (physical cell identifier, PCI), and the PCI is a cell identifier carried in a reference signal sent by a base station in the cell, or may be another cell identifier, for example, a new radio cell global identifier (NR cell global identifier, NCGI).

It may be understood that the terminal device in this embodiment of this application is a device equipped with a processor that can be configured to execute computer-executable instructions, and may be a handheld terminal (such as a mobile phone or a tablet computer), or may be a vehicle-mounted terminal (such as a wireless terminal in self-driving). Specifically, the terminal device may be the terminal device (including but not limited to any one of the UE 1 to the UE 6) in FIG. 1, and is configured to perform the cell measurement method in embodiments of this application, to obtain a target cell that satisfies a positioning requirement, and perform a positioning request based on the target cell obtained through measurement, to improve positioning accuracy.

Optionally, the terminal device may obtain the cell information by receiving a broadcast message, a multicast message, or the like. The broadcast message, the multicast message, or the like may be sent by a first network device. Then, the terminal device determines, based on the cell information, a to-be-measured cell indicated by the cell information, where the cell indicated by the cell information may include a cell that supports positioning, or may include a cell that does not support positioning.

Optionally, the terminal device may alternatively obtain the cell information by receiving dedicated signaling such as a radio resource control (radio resource control, RRC) message. The dedicated signaling such as the RRC message may be sent by a first network device. Then, the terminal device determines, based on the cell information, a to-be-measured cell indicated by the cell information, where the cell indicated by the cell information includes a cell that supports positioning.

Optionally, the terminal device may alternatively obtain the cell information by reading configuration information such as a configuration list. The configuration information such as the configuration list may be preconfigured by the terminal device. This is not limited in embodiments of this application. Then, the terminal device determines, based on the cell information, a to-be-measured cell indicated by the cell information, where the cell indicated by the cell information includes a cell that supports positioning.

S602: Measure at least one cell indicated by the cell information, to obtain a measurement result.

The terminal device measures the at least one cell indicated by the cell information, to obtain the measurement result.

It may be understood that the terminal device may measure some cells indicated by the cell information, or may measure all cells indicated by the cell information, to obtain the measurement result. The measurement result includes but is not limited to a reference signal received power RSRP, reference signal received quality RSRQ, a received signal strength indication RSSI, power quality RSRQ, received signal strength (received signal strength indication, RSSI), and the like.

In a possible embodiment, that the terminal device measures, in descending order of frequency priorities and/or cell priorities, the at least one cell indicated by the cell information may be that some cells indicated by the cell information are measured, or all the cells indicated by the cell information are measured.

In this embodiment of this application, a sequence of measuring the cells indicated by the cell information is provided. On a premise that a specific quantity of target cells used for positioning is determined, a required cell may be first measured in descending order of the frequency priorities and/or the cell priorities, to obtain the target cell that satisfies the positioning requirement, and the positioning request is performed based on the target cell obtained through measurement, so that the positioning accuracy can be improved.

In a possible embodiment, when cells indicated by the cell information include a plurality of cells with a same frequency priority, that the terminal device measures a plurality of cells with a same frequency priority in descending order of cell priorities may be that some of the plurality of cells with the same frequency priority are measured, or may be that all of the plurality of cells with the same frequency priority are measured.

In this embodiment of this application, a sequence of measuring the plurality of cells with the same frequency priority is provided. On the premise that the specific quantity of target cells for positioning is determined, the required cell may be first measured, to obtain the target cell that satisfies the positioning requirement, and the positioning request is performed based on the target cell obtained through measurement, so that the positioning accuracy can be improved.

Optionally, the terminal device may obtain information about the frequency priority and/or the cell priority by receiving a broadcast message, a multicast message, or the like. The broadcast message, the multicast message, or the like may be sent by the first network device. Then, the terminal device determines a cell measurement sequence based on the information about the frequency priority and/or the cell priority, and preferentially measures a required cell.

Optionally, the terminal device may alternatively obtain information about the frequency priority and/or the cell priority by receiving dedicated signaling such as an RRC message. The dedicated signaling such as the RRC message may be sent by the first network device. Then, the terminal device determines a cell measurement sequence based on the information about the frequency priority and/or the cell priority, and preferentially measures a required cell.

Optionally, the terminal device may alternatively obtain the information about the frequency priority and/or the cell priority by reading configuration information such as a configuration list. The configuration information such as the configuration list may be preconfigured by the terminal device. This is not limited in embodiments of this application. Then, the terminal device determines a cell measurement sequence based on the information about the frequency priority and/or the cell priority, and preferentially measures a required cell.

It may be understood that the information about the frequency priority and/or the cell priority and the cell information may be carried in a same broadcast message, multicast message, or RRC message, or may be respectively carried in different broadcast messages, multicast messages, or RRC messages. This is not limited in embodiments of this application.

In a possible embodiment, measurement performed on the at least one cell indicated by the cell information in a positioning scenario is referred to as first measurement, and measurement performed on a found cell in a scenario of cell selection or cell reselection is referred to as second measurement. When both the first measurement and the second measurement exist, the terminal device preferentially performs the first measurement, in other words, preferentially measures the at least one cell indicated by the cell information.

In a possible embodiment, when obtaining a measurement indication, the terminal device measures the at least one cell indicated by the cell information, to obtain the measurement result.

For example, when a higher layer of the terminal device detects a positioning event or a positioning indication, the higher layer sends the measurement indication to a lower layer, and correspondingly, the lower layer receives the measurement indication from the higher layer.

The detected positioning event may be a positioning event triggered by a location change of the terminal device, or may be a positioning event triggered by the terminal device based on a positioning-related service requirement. The detected positioning indication may be a positioning indication sent by a network side to the terminal device, to indicate the terminal device to perform positioning. Alternatively, the terminal device may trigger, based on the positioning-related service requirement, the higher layer to deliver the positioning indication to the lower layer, to indicate the lower layer to perform positioning.

This embodiment of this application provides technical content of obtaining the measurement indication by the terminal device in the positioning scenario to trigger a cell measurement start condition. According to the cell measurement method in this embodiment of this application, the measurement indication may be obtained under a corresponding start condition to trigger cell measurement, to obtain the target cell that satisfies the positioning requirement, and the positioning request is performed based on the target cell obtained through measurement, so that the positioning accuracy can be improved.

In a possible embodiment, the terminal device periodically measures, based on measurement periodicity information, the at least one cell indicated by the cell information, to obtain the measurement result.

Optionally, the terminal device may obtain the measurement periodicity information by receiving a broadcast message, a multicast message, or the like. The broadcast message, the multicast message, or the like may be sent by the first network device. Then, the terminal device periodically measures, based on the measurement periodicity information, the at least one cell indicated by the cell information, to determine the target cell that satisfies the positioning requirement.

Optionally, the terminal device may alternatively obtain the measurement periodicity information by receiving dedicated signaling such as an RRC message. The dedicated signaling such as the RRC message may be sent by the first network device. Then, the terminal device periodically measures, based on the measurement periodicity information, the at least one cell indicated by the cell information, to determine the target cell that satisfies the positioning requirement.

Optionally, the terminal device may alternatively obtain the measurement periodicity information by reading configuration information such as a configuration list. The configuration information such as the configuration list may be preconfigured by the terminal device. Then, the terminal device periodically measures, based on the measurement periodicity information, the at least one cell indicated by the cell information, to determine the target cell that satisfies the positioning requirement.

Optionally, the terminal device may alternatively obtain the measurement periodicity information by reading protocol content. The measurement periodicity information is specified in a protocol. This is not limited in embodiments of this application. Then, the terminal device periodically measures, based on the measurement periodicity information, the at least one cell indicated by the cell information, to determine the target cell that satisfies the positioning requirement.

This embodiment of this application provides technical content of a cell measurement periodicity of the terminal device in the positioning scenario. According to the cell measurement method in this embodiment of this application, the cell indicated by cell information may be periodically measured, to obtain the target cell that satisfies the positioning requirement, and the positioning request is performed based on the target cell obtained through measurement, so that the positioning accuracy can be improved.

S603: Determine at least one target cell based on the measurement result.

The terminal device determines the at least one target cell based on the measurement result.

It may be understood that the terminal device may determine two or more target cells, and a plurality of target cells are used for positioning. This helps improve the positioning accuracy.

In a possible embodiment, when the cell indicated by the cell information is measured, a value relationship between a signal received power of a cell and a power threshold is determined, or a value relationship between signal received quality of a cell and a quality threshold is determined, or a value relationship between a value of R in an R criterion and a threshold is determined, or a value relationship between a value of S in an S criterion and a threshold is determined, to further determine whether to determine the cell as the target cell.

For example, when a first cell is measured, it is determined that a signal received power of the first cell is greater than the power threshold, or signal received quality of the first cell is greater than the quality threshold, or a value of R in the R criterion is greater than the threshold, or a value of S in the S criterion is greater than the threshold, and the first cell is determined as the target cell. It may be understood that the first cell is a cell that has been measured, that supports positioning, and that is in the cells indicated by the cell information. The terminal device may determine two or more target cells, and a plurality of target cells are used for positioning. This helps improve the positioning accuracy.

In this embodiment of this application, technical content of determining the at least one target cell based on the measurement result is provided, so that when determining that a quantity of target cells for positioning reaches a required quantity, the terminal device can stop measurement of remaining cells, in other words, there is no need to measure all the cells indicated by the cell information. Therefore, cell measurement time and target cell determining time are reduced, the target cell that satisfies the positioning requirement can be obtained, and the positioning request is performed based on the target cell obtained through measurement, so that the positioning accuracy can be improved.

Optionally, when a measurement stop condition is satisfied, the terminal device stops measurement of the cell indicated by the cell information.

The measurement stop condition herein may be that a quantity of target cells is greater than a second threshold.

For example, when the quantity that is of target cells and that is determined by the terminal device is greater than the second threshold, the terminal device stops measurement of the cell indicated by the cell information. In this case, the terminal device performs positioning based on the target cell obtained through measurement.

This embodiment of this application provides technical content of stopping cell measurement by the terminal device in the positioning scenario. According to the cell measurement method in this embodiment of this application, when the corresponding measurement stop condition is satisfied, measurement of the cell indicated by cell information can be stopped in time, to save measurement resources and obtain the target cell that satisfies the positioning requirement, and the positioning request is performed based on the target cell obtained through measurement, so that the positioning accuracy can be improved.

Optionally, the terminal device may obtain the second threshold by receiving a broadcast message, a multicast message, or the like. The broadcast message, the multicast message, or the like may be sent by the first network device. Then, the terminal device determines, based on the second threshold and the determined quantity of target cells, whether to stop cell measurement. When the determined quantity of target cells is greater than the second threshold, the terminal device stops, in time, measurement of the cell indicated by the cell information, to save measurement resources.

Optionally, the terminal device may alternatively obtain the second threshold by receiving dedicated signaling such as an RRC message. The dedicated signaling such as the RRC message may be sent by the first network device. Then, the terminal device determines, based on the second threshold and the determined quantity of target cells, whether to stop cell measurement. When the determined quantity of target cells is greater than the second threshold, the terminal device stops, in time, measurement of the cell indicated by the cell information, to save measurement resources.

Optionally, the terminal device may alternatively obtain the second threshold by reading configuration information such as a configuration list. The configuration information such as the configuration list may be preconfigured by the terminal device. Then, the terminal device determines, based on the second threshold and the determined quantity of target cells, whether to stop cell measurement. When the determined quantity of target cells is greater than the second threshold, the terminal device stops, in time, measurement of the cell indicated by the cell information, to save measurement resources.

Optionally, the terminal device may alternatively obtain the second threshold by reading protocol content. The second threshold is specified in a protocol. This is not limited in embodiments of this application. Then, the terminal device determines, based on the second threshold and the determined quantity of target cells, whether to stop cell measurement. When the determined quantity of target cells is greater than the second threshold, the terminal device stops, in time, measurement of the cell indicated by the cell information, to save measurement resources.

In a possible embodiment, after all the cells indicated by the cell information have been measured, the cells indicated by the cell information are sorted in descending order of values of R in the R criterion, or values of S in the S criterion, or cell signal received powers, or cell signal received quality in a cell selection or cell reselection process, and the first N cells that support positioning are determined as the target cells.

For example, it is learned, based on a sorting result, that a second cell is in the first N cells that support positioning, and the second cell is determined as the target cell. It may be understood that the second cell is a cell that has been measured, that supports positioning, and that is in the cells indicated by the cell information. The terminal device may determine two or more target cells, and a plurality of target cells are used for positioning. This helps improve the positioning accuracy.

In this embodiment of this application, technical content of determining the at least one target cell based on the measurement result is provided, so that when the specific quantity of target cells for positioning is determined, a specific quantity of target cells that relatively satisfy the positioning requirement can be selected from all the cells indicated by cell information, and the positioning request is performed based on the target cell obtained through measurement, so that the positioning accuracy can be improved.

S604: The terminal device sends a positioning request to the first network device, and correspondingly, the first network device receives the positioning request sent by the terminal device.

The positioning request includes information about the at least one target cell.

It may be understood that the positioning request may be a request for uplink positioning, or may be a request for low-power high-accuracy positioning (low-power high-accuracy positioning, LPHAP). This is not limited in embodiments of this application.

The first network device in this embodiment of this application is a device equipped with a processor that can be configured to execute computer-executable instructions, may be an access network device (for example, a base station or a transmission point TRP), and may be specifically the access network device in FIG. 1, configured to perform the positioning method in this embodiment of this application, to improve the positioning accuracy.

Current cell measurement in an idle state or an inactive state is applicable only to the cell selection or cell reselection process, and is not applicable to cell measurement in a positioning process. In addition, technical content of how the terminal device should perform cell measurement in the positioning scenario is not provided. In other words, if a current cell measurement method in the idle state or the inactive state (that is, a cell measurement method in the cell selection or cell reselection process) is used, a cell obtained through measurement is not applicable to uplink positioning, the positioning request is performed based on the cell obtained through measurement, and this greatly affects the positioning accuracy. In contrast, this embodiment of this application provides technical content of how the terminal device should perform cell measurement in the positioning scenario in the idle state or the inactive state. According to the cell measurement method in this embodiment of this application, the target cell that satisfies the positioning requirement can be obtained, and the positioning request is performed based on the target cell obtained through measurement, so that the positioning accuracy can be improved.

In addition, this application further provides a method for starting cell measurement. The method for starting cell measurement is applied to the field of communication technologies, and the method includes but is not limited to the following steps.

When obtaining a measurement indication, a terminal device measures at least one cell indicated by cell information, to obtain a measurement result.

For example, when a higher layer inside the terminal device detects a positioning event or a positioning indication, the higher layer sends the measurement indication to a lower layer, and correspondingly, the lower layer receives the measurement indication from the higher layer.

The detected positioning event may be a positioning event triggered by a location change of the terminal device, or may be a positioning event triggered by the terminal device based on a positioning-related service requirement. The detected positioning indication may be a positioning indication sent by a network side to the terminal device, to indicate the terminal device to perform positioning. Alternatively, the terminal device may trigger, based on the positioning-related service requirement, the higher layer to deliver the positioning indication to the lower layer, to indicate the lower layer to perform positioning.

This embodiment of this application provides technical content of obtaining the measurement indication by the terminal device in the positioning scenario to trigger a cell measurement start condition. According to the cell measurement method in this embodiment of this application, the measurement indication may be obtained under a corresponding start condition to trigger cell measurement, so that in the positioning scenario in an idle state or an inactive state, the terminal device performs cell measurement only when the measurement start condition is satisfied, to reduce power consumption of the terminal device.

In addition, this application further provides a method for stopping cell measurement. The method for stopping cell measurement is applied to the field of communication technologies, and the method includes but is not limited to the following steps.

When a measurement stop condition is satisfied, a terminal device stops measurement of a cell indicated by cell information. In this case, the terminal device performs positioning based on a target cell obtained through measurement.

The measurement stop condition includes but is not limited to the following:

(1) The terminal device sends a positioning request to a first network device.
(2) Time in which the terminal device performs cell measurement is greater than a first threshold.
For example, after a positioning event is triggered or cell measurement is triggered on a terminal device side, a timer is started. Cell measurement is performed within time indicated by the timer, and after the timer expires (greater than the foregoing first threshold), the cell measurement is stopped.
(3) A quantity of target cells determined by the terminal device is greater than a second threshold.
(4) The terminal device reaches a maximum measurement capability (that is, a maximum capability of a quantity of cells that can be measured by the terminal device).

Optionally, the first threshold and/or the second threshold may be configured by a network side by using a broadcast message or dedicated signaling such as an RRC message, and the terminal device obtains the first threshold and/or the second threshold by receiving the broadcast message or the RRC message from the network side. Alternatively, the first threshold and/or the second threshold may be preconfigured by the terminal device, and the terminal device obtains the first threshold and/or the second threshold by reading configuration information such as a configuration list. Alternatively, the first threshold and/or the second threshold may be specified in a protocol, and the terminal device obtains the first threshold and/or the second threshold by reading protocol content. This is not limited in embodiments of this application.

This embodiment of this application provides technical content of stopping cell measurement by the terminal device in the positioning scenario. According to the cell measurement method in this embodiment of this application, in the positioning scenario in an idle state or an inactive state, when the corresponding measurement stop condition is satisfied, the terminal device stops, in time, measurement of the cell indicated by the cell information, to save measurement resources, and reduce power consumption of the terminal device.

In addition, this application further provides a method for periodically measuring a cell. The method for periodically measuring a cell is applied to the field of communication technologies, and the method includes but is not limited to the following steps.

A terminal device periodically measures, based on measurement periodicity information, at least one cell indicated by cell information, to obtain a measurement result.

Optionally, the measurement periodicity information may be configured by a network side by using a broadcast message or dedicated signaling such as an RRC message, and the terminal device obtains the measurement periodicity information by receiving the broadcast message or the RRC message from the network side, to periodically measure the cell indicated by the cell information. Alternatively, the measurement periodicity information may be preconfigured by the terminal device, and the terminal device obtains the measurement periodicity information by reading configuration information such as a configuration list, to periodically measure the cell indicated by the cell information. Alternatively, the measurement periodicity information may be specified in a protocol, and the terminal device obtains the measurement periodicity information by reading protocol content, to periodically measure the cell indicated by the cell information. This is not limited in embodiments of this application.

For example, the measurement periodicity information may be obtained through configuration based on an LTE positioning protocol (LTE positioning protocol, LPP) or a location service (location service, LCS), or the measurement periodicity information may be obtained based on a discontinuous reception (discontinuous reception, DRX) cycle or a sounding reference signal (sounding reference signal, SRS) resource periodicity in an idle state or an inactive state of a cell on which the terminal device camps on.

This embodiment of this application provides technical content of a cell measurement periodicity of the terminal device in the positioning scenario. According to the cell measurement method in this embodiment of this application, the cell indicated by cell information may be periodically measured, to obtain a target cell that satisfies a positioning requirement, and a positioning request is performed based on the target cell obtained through measurement, so that positioning accuracy can be improved.

In addition, this application further provides a method for determining a target cell based on cell measurement. The method for determining a target cell is applied to the field of communication technologies, and the method includes but is not limited to the following steps.

A terminal device determines at least one target cell based on a measurement result obtained through cell measurement.

It may be understood that the terminal device may determine two or more target cells, and a plurality of target cells are used for positioning. This helps improve positioning accuracy.

It may be understood that, based on the measurement result obtained through cell measurement, the following cells may be determined as candidate cells:

(1) A UE is not barred (barred) in a cell.
(2) A cell is a suitable cell (suitable cell).
(3) A broadcast message includes a posSRS (or supporting positioning) configuration of a candidate cell.
(4) A cell-specific reference signal received power RSRP of a cell is greater than a threshold. Optionally, a result (Srxlev) of a cell absolute signal strength RSRP is greater than a threshold. Optionally, a result (Squal) of cell relative quality RSRQ is greater than a threshold.
(5) An L1-RSRP of a beam (beam) in a cell is greater than a threshold.
(6) A quantity of beams (beams) whose RSRPs are greater than an L1-RSRP in a cell is greater than a threshold.
(7) If a cell selection threshold is not configured, a cell satisfies a detectable cell (detectable cell) condition.
(8) A cell satisfies an RSRP/RSRQ-based measurement condition within a period of time.

It may be understood that, based on the foregoing candidate cells, the following candidate cells may be determined as target cells:

(1) If a candidate cell is at a single frequency (band), the UE compares a candidate cell list with a cell combination list configured in a broadcast message, and selects a better cell combination (with a higher overlap degree) as the target cell. The higher overlap degree means that the cell combination list includes a combination with a large quantity of candidate cells, or means that the cell combination list includes a combination with a high proportion of candidate cells.
(2) If a candidate cell is at a plurality of frequencies (bands), a cell list corresponding to a frequency combination (band combination) supported by the UE is selected as the target cell.

In a possible embodiment, when a cell indicated by cell information is measured, a value relationship between a signal received power of the cell and a power threshold is determined, or a value relationship between signal received quality of the cell and a quality threshold is determined, to further determine whether to determine the cell as the target cell.

For example, when a first cell is measured, it is determined that a signal received power of the first cell is greater than the power threshold or signal received quality of the first cell is greater than the quality threshold, and the first cell is determined as the target cell. It may be understood that the first cell is a cell that has been measured, that supports positioning, and that is in cells indicated by the cell information. The terminal device may determine two or more target cells, and a plurality of target cells are used for positioning. This helps improve the positioning accuracy.

In this embodiment of this application, technical content of determining the at least one target cell based on the measurement result is provided, so that when determining that a quantity of target cells for positioning reaches a required quantity, the terminal device can stop measurement of remaining cells, in other words, there is no need to measure all cells indicated by the cell information. Therefore, cell measurement time and target cell determining time are reduced, a target cell that satisfies a positioning requirement can be obtained, and a positioning request is performed based on the target cell obtained through measurement, so that the positioning accuracy can be improved.

In a possible embodiment, after all the cells indicated by the cell information are measured, the cells indicated by the cell information are sorted in descending order of R criteria or cell signal received powers in a cell reselection process, and the first N cells that support positioning are determined as the target cells.

For example, it is learned, based on a sorting result, that a second cell is in the first N cells that support positioning, and the second cell is determined as the target cell. It may be understood that the second cell is a cell that has been measured, that supports positioning, and that is in the cells indicated by the cell information. The terminal device may determine two or more target cells, and a plurality of target cells are used for positioning. This helps improve the positioning accuracy.

In this embodiment of this application, technical content of determining the at least one target cell based on the measurement result is provided, so that when the specific quantity of target cells for positioning is determined, a specific quantity of target cells that relatively satisfy the positioning requirement can be selected from all the cells indicated by cell information, and the positioning request is performed based on the target cell obtained through measurement, so that the positioning accuracy can be improved.

According to another aspect, this application further provides a communication method corresponding to the cell measurement method in FIG. 6. The communication method is applied to the field of communication technologies, and the communication method includes but is not limited to the following steps.

A first network device receives a positioning request from a terminal device, where the positioning request includes information about at least one target cell, the at least one target cell is determined based on a measurement result obtained by measuring at least one cell indicated by cell information, and the positioning request is for requesting to position the terminal device.

The first network device sends the positioning request to a second network device.

It may be understood that the terminal device in this embodiment of this application is a device equipped with a processor that can be configured to execute computer-executable instructions, and may be a handheld terminal (such as a mobile phone or a tablet computer), or may be a vehicle-mounted terminal (such as a wireless terminal in self-driving). Specifically, the terminal device may be the terminal device (including but not limited to any one of the UE 1 to the UE 6) in FIG. 1, and is configured to perform the cell measurement method in embodiments of this application, to obtain a target cell that satisfies a positioning requirement, and perform a positioning request based on the target cell obtained through measurement, to improve positioning accuracy. The first network device in this embodiment of this application is a device equipped with a processor that can be configured to execute computer-executable instructions, may be an access network device (for example, a base station or a transmission point TRP), and may be specifically the access network device in FIG. 1, configured to perform the positioning method in this embodiment of this application, to improve the positioning accuracy. It may be understood that the first network device in this embodiment of this application is a device equipped with a processor that can be configured to execute computer-executable instructions, may be an access network device (for example, a base station or a transmission point TRP), and may be specifically the access network device in FIG. 1, configured to perform the communication method in this embodiment of this application, to improve the positioning accuracy.

It may be understood that the second network device in this embodiment of this application is a device equipped with a processor that can be configured to execute computer-executable instructions, may be a core network device (for example, a server), and may be specifically the LMF in FIG. 2, configured to perform the positioning method in this embodiment of this application, to improve the positioning accuracy.

In a possible implementation, the measurement result is obtained by measuring, in descending order of frequency priorities and/or cell priorities, the at least one cell indicated by the cell information.

In a possible implementation, when cells indicated by the cell information include a plurality of cells with a same frequency priority, the measurement result is obtained by measuring the plurality of cells with the same frequency priority in descending order of cell priorities.

In a possible implementation, the target cell is determined based on a first cell whose signal received power is greater than a power threshold or whose signal received quality is greater than a quality threshold, where the first cell is a cell that has been measured, that supports positioning, and that is in the cells indicated by the cell information.

In a possible implementation, the target cell is determined based on the first N second cells in descending order of R criteria or cell signal received powers, where the second cell is a cell that has been measured, that supports positioning, and that is in the cells indicated by the cell information.

In a possible implementation, the method further includes:

The first network device sends a broadcast message or a radio resource control RRC message to the terminal device, where the broadcast message or the RRC message indicates the cell information.

In a possible implementation, the method further includes:

The first network device sends a broadcast message or a radio resource control RRC message to the terminal device, where the broadcast message or the RRC message indicates the cell priority and/or the frequency priority.

In a possible implementation, the method further includes:

The first network device sends a broadcast message or a radio resource control RRC message to the terminal device, where the broadcast message or the RRC message indicates measurement periodicity information, and the measurement periodicity information includes periodicity information for measuring the cell indicated by the cell information.

The foregoing describes in detail the methods provided in embodiments of this application. The following provides an apparatus for implementing any one of the methods in embodiments of this application. For example, an apparatus is provided. The apparatus includes units (or means) configured to implement steps performed by a device in any one of the foregoing methods.

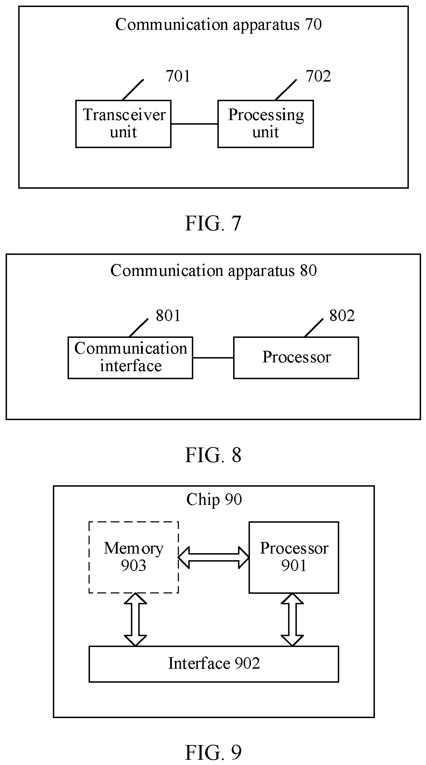

FIG. 7 is a diagram of a structure of a communication apparatus according to an embodiment of this application.

As shown in FIG. 7, the communication apparatus 70 may include a transceiver unit 701 and a processing unit 702. The transceiver unit 701 and the processing unit 702 may be software, hardware, or a combination of software and hardware.

The transceiver unit 701 may implement a sending function and/or a receiving function, and the transceiver unit 701 may also be described as a communication unit. Alternatively, the transceiver unit 701 may be a unit integrating an obtaining unit and a sending unit. The obtaining unit is configured to implement a receiving function, and the sending unit is configured to implement a sending function. Optionally, the transceiver unit 701 may be configured to receive information sent by another apparatus, and may be further configured to send information to the another apparatus.

In a possible design, the communication apparatus 70 may correspond to the terminal device in the method embodiment shown in FIG. 6. For example, the communication apparatus 70 may be the terminal device, or may be a chip in the terminal device. The communication apparatus 70 may include units configured to perform operations performed by the terminal device in the method embodiment shown in FIG. 6. In addition, the units in the communication apparatus 70 are respectively configured to perform the operations performed by the terminal device in the method embodiment shown in FIG. 6. The units are described as follows:

The processing unit 702 is configured to obtain cell information.

The processing unit 702 is further configured to measure at least one cell indicated by the cell information, to obtain a measurement result.

The processing unit 702 is further configured to determine at least one target cell based on the measurement result.

The transceiver unit 701 is configured to send a positioning request to a first network device, where the positioning request includes information about the at least one target cell.

In a possible implementation, the processing unit 702 is specifically configured to measure, in descending order of frequency priorities and/or cell priorities, the at least one cell indicated by the cell information.

In a possible implementation, the processing unit 702 is specifically configured to: when cells indicated by the cell information include a plurality of cells with a same frequency priority, measure the plurality of cells with the same frequency priority in descending order of cell priorities.

In a possible implementation, the processing unit 702 is specifically configured to: when both first measurement and second measurement exist, preferentially perform the first measurement, where the first measurement includes measuring, in a positioning scenario, the at least one cell indicated by the cell information, and the second measurement includes measuring a found cell in a scenario of cell selection or cell reselection.

In a possible implementation, the processing unit 702 is specifically configured to: when a signal received power of a first cell is greater than a power threshold, or signal received quality is greater than a quality threshold, or a value of R in an R criterion is greater than a threshold, or a value of S in an S criterion is greater than a threshold, determine the first cell as the target cell, where the first cell is a cell that has been measured, that supports positioning, and that is in the cells indicated by the cell information.

In a possible implementation, the processing unit 702 is specifically configured to determine the first N second cells as the target cells in descending order of values of R in an R criterion, or values of S in an S criterion, or cell signal received powers, or cell signal received quality, where the second cell is a cell that has been measured, that supports positioning, and that is in the cells indicated by the cell information.

In a possible implementation, the cell information is carried in either of the following messages: a broadcast message and a radio resource control RRC message; or

the cell information is preconfigured information.

In a possible implementation, information about the cell priority and/or the frequency priority is carried in a broadcast message or an RRC message; or

information about the cell priority and/or the frequency priority is preconfigured information.

In a possible implementation, the processing unit 702 is specifically configured to obtain a measurement indication, where the measurement indication indicates to measure the at least one cell indicated by the cell information; and

the processing unit 702 is specifically configured to measure the at least one cell indicated by the cell information.

In a possible implementation, the processing unit 702 is specifically configured to: when a higher layer detects a positioning event or a positioning indication, receive the measurement indication from the higher layer.

In a possible implementation, the processing unit 702 is specifically configured to: when a measurement stop condition is satisfied, stop measurement of the cell indicated by the cell information.

The measurement stop condition includes any one of the following: A positioning request is sent, measurement time is greater than a first threshold, or a quantity of target cells is greater than a second threshold.

In a possible implementation, the first threshold and/or the second threshold are/is carried in a broadcast message or an RRC message; or

the first threshold and/or the second threshold are/is preconfigured values/a preconfigured value; or
the first threshold and/or the second threshold are/is specified in a protocol.

In a possible implementation, measurement periodicity information of the cell indicated by the cell information is carried in a broadcast message or an RRC message; or

measurement periodicity information of the cell indicated by the cell information is preconfigured information; or
measurement periodicity information of the cell indicated by the cell information is specified in a protocol.

In another possible design, the communication apparatus 70 may correspond to the first network device in the method embodiment shown in FIG. 6. For example, the communication apparatus 70 may be the first network device, or may be a chip in the first network device. The communication apparatus 70 may include units configured to perform operations performed by the first network device in the method embodiment shown in FIG. 6. In addition, the units in the communication apparatus 70 are respectively configured to perform the operations performed by the first network device in the method embodiment shown in FIG. 6. The units are described as follows:

The transceiver unit 701 is configured to receive a positioning request from a terminal device, where the positioning request includes information about at least one target cell, the at least one target cell is determined based on a measurement result obtained by measuring at least one cell indicated by cell information, and the positioning request is for requesting to position the terminal device.

The transceiver unit 701 is further configured to send the positioning request to a second network device.

In a possible implementation, the measurement result is obtained by measuring, in descending order of frequency priorities and/or cell priorities, the at least one cell indicated by the cell information.

In a possible implementation, when cells indicated by the cell information include a plurality of cells with a same frequency priority, the measurement result is obtained by measuring the plurality of cells with the same frequency priority in descending order of cell priorities.

In a possible implementation, the target cell is determined based on a first cell whose signal received power is greater than a power threshold or whose signal received quality is greater than a quality threshold, where the first cell is a cell that has been measured, that supports positioning, and that is in the cells indicated by the cell information.

In a possible implementation, the target cell is determined based on the first N second cells in descending order of R criteria or cell signal received powers, where the second cell is a cell that has been measured, that supports positioning, and that is in the cells indicated by the cell information.

In a possible implementation, the transceiver unit 701 is further configured to send a broadcast message or a radio resource control RRC message to the terminal device, where the broadcast message or the RRC message indicates the cell information.

In a possible implementation, the transceiver unit 701 is further configured to send a broadcast message or a radio resource control RRC message to the terminal device, where the broadcast message or the RRC message indicates the cell priority and/or the frequency priority.

In a possible implementation, the transceiver unit 701 is further configured to send a broadcast message or a radio resource control RRC message to the terminal device, where the broadcast message or the RRC message indicates measurement periodicity information, and the measurement periodicity information includes periodicity information for measuring the cell indicated by the cell information.

In this embodiment of this application, a part or all of the units of the apparatus shown in FIG. 7 may be combined into one or more other units, or one (or more) of the units may be divided into a plurality of smaller functional units. In this way, same operations can be implemented without affecting achievement of technical effects of embodiments of this application. The foregoing units are obtained through division based on logical functions. In actual application, a function of one unit may be implemented by a plurality of units, or functions of a plurality of units may be implemented by one unit. In another embodiment of this application, the electronic device may further include another unit. In actual application, the functions may be implemented with assistance of the another unit, and may be implemented by a plurality of units in collaboration.

It should be noted that, for implementations of the units, refer to corresponding descriptions of the method embodiment shown in FIG. 6.

In the communication apparatus 70 described in FIG. 7, technical content of how a terminal device should perform cell measurement in a positioning scenario in an idle state or an inactive state is provided. According to the cell measurement method in this embodiment of this application, a target cell that satisfies a positioning requirement can be obtained, and a positioning request is performed based on the target cell obtained through measurement, so that positioning accuracy can be improved.

FIG. 8 is a diagram of a structure of a communication apparatus according to an embodiment of this application.

It should be understood that the communication apparatus 80 shown in FIG. 8 is merely an example. The communication apparatus in this embodiment of this application may further include another component, or include a component with a function similar to that of a component in FIG. 8, or does not necessarily need to include all components in FIG. 8.

The communication apparatus 80 includes a communication interface 801 and at least one processor 802.

The communication apparatus 80 may correspond to any network element or device of a terminal device, a first network device, or a second network device. The communication interface 801 is configured to receive and send signals, and the at least one processor 802 executes program instructions, to enable the communication apparatus 80 to implement a corresponding procedure of a method performed by a corresponding device in the foregoing method embodiment.

In a possible design, the communication apparatus 80 may correspond to the terminal device in the method embodiment shown in FIG. 6. For example, the communication apparatus 80 may be the terminal device, or may be a chip in the terminal device. The communication apparatus 80 may include components configured to perform operations performed by the terminal device in the foregoing method embodiment. In addition, the components in the communication apparatus 80 are respectively configured to perform the operations performed by the terminal device in the foregoing method embodiment. Details may be as follows:

obtaining cell information;
measuring at least one cell indicated by the cell information, to obtain a measurement result;
determining at least one target cell based on the measurement result; and
sending a positioning request to a first network device, where the positioning request includes information about the at least one target cell.

In a possible implementation, the measuring at least one cell indicated by the cell information includes:
measuring, in descending order of frequency priorities and/or cell priorities, the at least one cell indicated by the cell information.

In a possible implementation, the measuring, in descending order of frequency priorities and/or cell priorities, the at least one cell indicated by the cell information includes:
when cells indicated by the cell information include a plurality of cells with a same frequency priority, measuring the plurality of cells with the same frequency priority in descending order of cell priorities.

In a possible implementation, the measuring at least one cell indicated by the cell information includes:
when both first measurement and second measurement exist, preferentially performing the first measurement, where the first measurement includes measuring, in a positioning scenario, the at least one cell indicated by the cell information, and the second measurement includes measuring a found cell in a scenario of cell selection or cell reselection.

In a possible implementation, the determining at least one target cell includes:
when a signal received power of a first cell is greater than a power threshold, or signal received quality is greater than a quality threshold, or a value of R in an R criterion is greater than a threshold, or a value of S in an S criterion is greater than a threshold, determining the first cell as the target cell, where the first cell is a cell that has been measured, that supports positioning, and that is in the cells indicated by the cell information.

In a possible implementation, the determining at least one target cell includes:
determining the first N second cells as the target cells in descending order of values of R in an R criterion, or values of S in an S criterion, or cell signal received powers, or cell signal received quality, where the second cell is a cell that has been measured, that supports positioning, and that is in the cells indicated by the cell information.

In a possible implementation,

the cell information is carried in either of the following messages: a broadcast message and a radio resource control RRC message; or
the cell information is preconfigured information.

In a possible implementation,

information about the cell priority and/or the frequency priority is carried in a broadcast message or an RRC message; or
information about the cell priority and/or the frequency priority is preconfigured information.

In a possible implementation, the measuring at least one cell indicated by the cell information includes:

obtaining a measurement indication, where the measurement indication indicates to measure the at least one cell indicated by the cell information; and
measuring the at least one cell indicated by the cell information.

In a possible implementation, the obtaining a measurement indication includes:
when a higher layer detects a positioning event or a positioning indication, receiving the measurement indication from the higher layer.
In a possible implementation, the method further includes:
when a measurement stop condition is satisfied, stopping measurement of the cell indicated by the cell information.
The measurement stop condition includes any one of the following: A positioning request is sent, measurement time is greater than a first threshold, or a quantity of target cells is greater than a second threshold.
In a possible implementation,

the first threshold and/or the second threshold are/is carried in a broadcast message or an RRC message; or
the first threshold and/or the second threshold are/is preconfigured values/a preconfigured value; or
the first threshold and/or the second threshold are/is specified in a protocol.

In a possible implementation,

measurement periodicity information of the cell indicated by the cell information is carried in a broadcast message or an RRC message; or
measurement periodicity information of the cell indicated by the cell information is preconfigured information; or
measurement periodicity information of the cell indicated by the cell information is specified in a protocol.

In another possible design, the communication apparatus 80 may correspond to the first network device in the method embodiment shown in FIG. 6. For example, the communication apparatus 80 may be the first network device, or may be a chip in the first network device. The communication apparatus 80 may include components configured to perform operations performed by the first network device in the foregoing method embodiment. In addition, the components in the communication apparatus 80 are respectively configured to perform the operations performed by the first network device in the foregoing method embodiment. Details may be as follows:
A first network device receives a positioning request from a terminal device, where the positioning request includes information about at least one target cell, the at least one target cell is determined based on a measurement result obtained by measuring at least one cell indicated by cell information, and the positioning request is for requesting to position the terminal device.
The first network device sends the positioning request to a second network device.
In a possible implementation, the measurement result is obtained by measuring, in descending order of frequency priorities and/or cell priorities, the at least one cell indicated by the cell information.
In a possible implementation, when cells indicated by the cell information include a plurality of cells with a same frequency priority, the measurement result is obtained by measuring the plurality of cells with the same frequency priority in descending order of cell priorities.
In a possible implementation, the target cell is determined based on a first cell whose signal received power is greater than a power threshold or whose signal received quality is greater than a quality threshold, where the first cell is a cell that has been measured, that supports positioning, and that is in the cells indicated by the cell information.
In a possible implementation, the target cell is determined based on the first N second cells in descending order of R criteria or cell signal received powers, where the second cell is a cell that has been measured, that supports positioning, and that is in the cells indicated by the cell information.

In a possible implementation, the method further includes:

The first network device sends a broadcast message or a radio resource control RRC message to the terminal device, where the broadcast message or the RRC message indicates the cell information.

In a possible implementation, the method further includes:

The first network device sends a broadcast message or a radio resource control RRC message to the terminal device, where the broadcast message or the RRC message indicates the cell priority and/or the frequency priority.

In a possible implementation, the method further includes:

The first network device sends a broadcast message or a radio resource control RRC message to the terminal device, where the broadcast message or the RRC message indicates measurement periodicity information, and the measurement periodicity information includes periodicity information for measuring the cell indicated by the cell information.

In the communication apparatus 80 described in FIG. 8, technical content of how a terminal device should perform cell measurement in a positioning scenario in an idle state or an inactive state is provided. According to the cell measurement method in this embodiment of this application, a target cell that satisfies a positioning requirement can be obtained, and a positioning request is performed based on the target cell obtained through measurement, so that positioning accuracy can be improved.

When the communication apparatus may be a chip or a chip system, refer to a diagram of a structure of a chip shown in FIG. 9.

As shown in FIG. 9, a chip 90 includes a processor 901 and an interface 902. There may be one or more processors 901 and a plurality of interfaces 902. It should be noted that a function corresponding to each of the processor 901 and the interface 902 may be implemented by using a hardware design, or may be implemented by using a software design, or may be implemented by combining software and hardware. This is not limited herein.

Optionally, the chip 90 may further include a memory 903, and the memory 903 is configured to store necessary program instructions and data.

In this application, the processor 901 may be configured to invoke, from the memory 903, a program for implementing, on one or more devices or network elements of the terminal device, the first network device, and the second network device, the communication method provided in one or more embodiments of this application, and execute instructions included in the program. The interface 902 may be configured to output an execution result of the processor 901. In this application, the interface 902 may be specifically configured to output messages or information of the processor 901.

For the communication method provided in one or more embodiments of this application, refer to the foregoing embodiments shown in FIG. 6. Details are not described herein again.

The processor in this embodiment of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The memory in this embodiment of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the method provided in embodiments of this application, an embodiment of this application further provides a computer-readable storage medium. The computer-readable storage medium stores a computer program. When the computer program is run on one or more processors, the method shown in FIG. 6 may be implemented.

According to the method provided in embodiments of this application, an embodiment of this application further provides a computer program product. The computer program product includes a computer program. When the computer program is run on a processor, the method shown in FIG. 6 may be implemented.

An embodiment of this application further provides a system. The system includes at least one of the communication apparatus 70, the communication apparatus 80, or the chip 90, and is configured to perform steps performed by a corresponding device in any embodiment in FIG. 6.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, may be a system on chip (system on chip, SoC), may be a central processing unit (central processing unit, CPU), may be a network processor (network processor, NP), may be a digital signal processor (digital signal processor, DSP), may be a micro controller unit (micro controller unit, MCU), or may be a programmable logic device (programmable logic device, PLD) or another integrated chip. The processing apparatus may implement or perform the methods, the steps, and logical block diagrams that are disclosed in embodiments of this application. The general-purpose processor may be a microprocessor, or the processor may be any conventional processor or the like. The steps in the method disclosed with reference to embodiments of this application may be directly performed by a hardware decoding processor, or may be performed by using a combination of hardware and a software module in the decoding processor. A software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limited descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the system and method described in this specification includes but is not limited to these and any other suitable types of memories.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state disc (solid-state disc, SSD)), or the like.

The units in the foregoing apparatus embodiments totally correspond to electronic devices in the method embodiments, and corresponding modules or units perform corresponding steps. For example, the communication unit (transceiver) performs receiving or sending steps in the method embodiments, and steps other than sending and receiving may be performed by the processing unit (processor). For a function of a specific unit, refer to a corresponding method embodiment. There may be one or more processors.

It may be understood that in embodiments of this application, an electronic device may perform a part or all steps in embodiments of this application. These steps or operations are merely examples. In embodiments of this application, other operations or variations of the operations may be performed. In addition, the steps may be performed in a sequence different from a sequence presented in embodiments of this application, and not all the operations in embodiments of this application need to be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A cell measurement method, comprising:

   obtaining cell information;
   measuring at least one cell indicated by the cell information, to obtain a measurement result;
   determining at least one target cell based on the measurement result; and
   sending a positioning request to a first network device, wherein the positioning request comprises information about the at least one target cell.

2. The method according to claim 1, wherein the measuring at least one cell indicated by the cell information comprises:
   measuring, in descending order of frequency priorities and/or cell priorities, the at least one cell indicated by the cell information.

3. The method according to claim 2, wherein the measuring, in descending order of frequency priorities and/or cell priorities, the at least one cell indicated by the cell information comprises:
   when cells indicated by the cell information comprise a plurality of cells with a same frequency priority, measuring the plurality of cells with the same frequency priority in descending order of cell priorities.

4. The method according to any one of claims 1 to 3, wherein the measuring at least one cell indicated by the cell information comprises:
   when both first measurement and second measurement exist, preferentially performing the first measurement, wherein the first measurement comprises measuring, in a positioning scenario, the at least one cell indicated by the cell information, and the second measurement comprises measuring a found cell in a scenario of cell selection or cell reselection.

5. The method according to any one of claims 1 to 4, wherein the determining at least one target cell comprises:
   when a signal received power of a first cell is greater than a power threshold, or signal received quality is greater than a quality threshold, or a value of R in an R criterion is greater than a threshold, or a value of S in an S criterion is greater than a threshold, determining the first cell as the target cell, wherein the first cell is a cell that has been measured, that supports positioning, and that is in the cells indicated by the cell information.

6. The method according to any one of claims 1 to 4, wherein the determining at least one target cell comprises: determining the first N second cells as the target cells in descending order of values of R in an R criterion, or values of S in an S criterion, or cell signal received powers, or cell signal received quality, wherein the second cell is a cell that has been measured, that supports positioning, and that is in the cells indicated by the cell information.

7. The method according to any one of claims 1 to 6, wherein

the cell information is carried in either of the following messages: a broadcast message and a radio resource control RRC message; or
the cell information is preconfigured information.

8. The method according to claim 2 or 3, wherein

information about the cell priority and/or the frequency priority is carried in a broadcast message or an RRC message; or
information about the cell priority and/or the frequency priority is preconfigured information.

9. The method according to any one of claims 1 to 8, wherein the measuring at least one cell indicated by the cell information comprises:

obtaining a measurement indication, wherein the measurement indication indicates to measure the at least one cell indicated by the cell information; and
measuring the at least one cell indicated by the cell information.

10. The method according to claim 9, wherein the obtaining a measurement indication comprises: when a higher layer detects a positioning event or a positioning indication, receiving the measurement indication from the higher layer.

11. The method according to any one of claims 1 to 10, wherein the method further comprises:

when a measurement stop condition is satisfied, stopping measurement of the cell indicated by the cell information, wherein
the measurement stop condition comprises any one of the following: a positioning request is sent, measurement time is greater than a first threshold, or a quantity of target cells is greater than a second threshold.

12. The method according to claim 11, wherein

the first threshold and/or the second threshold are/is carried in a broadcast message or an RRC message; or
the first threshold and/or the second threshold are/is preconfigured values/a preconfigured value; or
the first threshold and/or the second threshold are/is specified in a protocol.

13. The method according to any one of claims 1 to 12, wherein

measurement periodicity information of the cell indicated by the cell information is carried in a broadcast message or an RRC message; or
measurement periodicity information of the cell indicated by the cell information is preconfigured information; or
measurement periodicity information of the cell indicated by the cell information is specified in a protocol.

14. A communication apparatus, comprising:

a processing unit, configured to obtain cell information, wherein
the processing unit is further configured to measure at least one cell indicated by the cell information, to obtain a measurement result; and
the processing unit is further configured to determine at least one target cell based on the measurement result; and

a transceiver unit, configured to send a positioning request to a first network device, wherein the positioning request comprises information about the at least one target cell.

15. The apparatus according to claim 14, wherein the processing unit is specifically configured to measure, in descending order of frequency priorities and/or cell priorities, the at least one cell indicated by the cell information.

16. The apparatus according to claim 15, wherein the processing unit is specifically configured to: when cells indicated by the cell information comprise a plurality of cells with a same frequency priority, measure the plurality of cells with the same frequency priority in descending order of cell priorities.

17. The apparatus according to any one of claims 14 to 16, wherein the processing unit is specifically configured to: when both first measurement and second measurement exist, preferentially perform the first measurement, wherein the first measurement comprises measuring, in a positioning scenario, the at least one cell indicated by the cell information, and the second measurement comprises measuring a found cell in a scenario of cell selection or cell reselection.

18. The apparatus according to any one of claims 14 to 17, wherein the processing unit is specifically configured to: when a signal received power of a first cell is greater than a power threshold, or signal received quality is greater than a quality threshold, or a value of R in an R criterion is greater than a threshold, or a value of S in an S criterion is greater than a threshold, determine the first cell as the target cell, wherein the first cell is a cell that has been measured, that supports positioning, and that is in the cells indicated by the cell information.

19. The apparatus according to any one of claims 14 to 17, wherein the processing unit is specifically configured to determine the first N second cells as the target cells in descending order of values of R in an R criterion, or values of S in an S criterion, or cell signal received powers, or cell signal received quality, wherein the second cell is a cell that has been measured, that supports positioning, and that is in the cells indicated by the cell information.

20. The apparatus according to any one of claims 14 to 19, wherein

   the cell information is carried in either of the following messages: a broadcast message and a radio resource control RRC message; or
   the cell information is preconfigured information.

21. The apparatus according to claim 15 or 16, wherein

   information about the cell priority and/or the frequency priority is carried in a broadcast message or an RRC message; or
   information about the cell priority and/or the frequency priority is preconfigured information.

22. The apparatus according to any one of claims 14 to 21, wherein the processing unit is specifically configured to obtain a measurement indication, wherein the measurement indication indicates to measure the at least one cell indicated by the cell information; and
   the processing unit is specifically configured to measure the at least one cell indicated by the cell information.

23. The apparatus according to claim 22, wherein the processing unit is specifically configured to: when a higher layer detects a positioning event or a positioning indication, receive the measurement indication from the higher layer.

24. The apparatus according to any one of claims 14 to 23, wherein the processing unit is specifically configured to: when a measurement stop condition is satisfied, stop measurement of the cell indicated by the cell information, wherein the measurement stop condition comprises any one of the following: a positioning request is sent, measurement time is greater than a first threshold, or a quantity of target cells is greater than a second threshold.

25. The apparatus according to claim 24, wherein

   the first threshold and/or the second threshold are/is carried in a broadcast message or an RRC message; or
   the first threshold and/or the second threshold are/is preconfigured values/a preconfigured value; or
   the first threshold and/or the second threshold are/is specified in a protocol.

26. The apparatus according to any one of claims 14 to 25, wherein

measurement periodicity information of the cell indicated by the cell information is carried in a broadcast message or an RRC message; or

measurement periodicity information of the cell indicated by the cell information is preconfigured information; or

measurement periodicity information of the cell indicated by the cell information is specified in a protocol.

27. A communication apparatus, comprising a processor, wherein
when the processor invokes a computer program or instructions in a memory, the method according to any one of claims 1 to 13 is performed.

28. A communication apparatus, comprising a logic circuit and a communication interface, wherein

the communication interface is configured to receive information or send information; and
the logic circuit is configured to receive information or send information through the communication interface, to perform the method according to any one of claims 1 to 13.

29. A computer-readable storage medium, wherein
the computer-readable storage medium is configured to store instructions or a computer program; and when the instructions or the computer program is executed, the method according to any one of claims 1 to 13 is implemented.

30. A computer program product, comprising instructions or a computer program, wherein
when the instructions or the computer program is executed, the method according to any one of claims 1 to 13 is implemented.

31. A communication system, comprising the communication apparatus according to any one of claims 14 to 26, or the communication apparatus according to claim 27, or the communication apparatus according to claim 28.

FIG. 1

FIG. 2

NR RRC_CONNECTED

Resume/
Release

Set up/
Release

NR RRC_INACTIVE

Release

NR RRC_IDLE

FIG. 3

| UE | Current serving base station (gNB) | Last serving base station (last serving gNB) | LMF |

The UE is in an inactive state

S401: Send an RRC connection resume request

S402: Send a context obtaining request

S403: Send a context obtaining response

S404: Send an RRC connection resume response

The UE is in a connected state

S405: Send RRC connection resume completion

S406: Xn-U address indication

S407: Path switching request

S408: Path switching response

S409: UE context release

FIG. 4

UE

Serving cell

gNB/TRP

S501: Determine to configure
an uplink SRS resource
(determine UL SRS resources)

S502: SRS configuration
(SRS configuration)

FIG. 5

Terminal
device

First network
device

S601: Obtain cell information

S602: Measure at least one cell
indicated by the cell information,
to obtain a measurement result

S603: Determine at least one
target cell based on the
measurement result

S604: Positioning request (information
about the at least one target cell)

FIG. 6

Communication apparatus 70

701 702

Transceiver unit

Processing unit

FIG. 7

Communication apparatus 80

801 802

Communication interface

Processor

FIG. 8

Chip 90

Memory 903

Processor 901

Interface 902

FIG. 9

## INTERNATIONAL SEARCH REPORT

| International application No. |
|---|
| **PCT/CN2023/092862** |

| A. | CLASSIFICATION OF SUBJECT MATTER |
|---|---|

H04W24/08(2009.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 测量, 检测, 定位, 位置, 请求, 小区, 目标, 终端, 设备, 选择, 确定, 挑选, measure, detect, locate, position, request, cell, target, UE, terminal, device, select, determine

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115604812 A (HUAWEI TECHNOLOGIES CO., LTD.) 13 January 2023 (2023-01-13) description, paragraphs [0005]-[0343] | 1-31 |
| Y | CN 112954583 A (CHINA TELECOM CORPORATION LIMITED) 11 June 2021 (2021-06-11) description, paragraphs [0004]-[0098] | 1-31 |
| Y | CN 109428657 A (CHINA MOBILE GROUP LIAONING COMPANY LIMITED) 05 March 2019 (2019-03-05) description, paragraphs [0008]-[0126] | 1-31 |
| Y | CN 113424610 A (ALCATEL-LUCENT SHANGHAI BELL CO., LTD. et al.) 21 September 2021 (2021-09-21) description, paragraphs [0004]-[0124] | 1-31 |
| Y | US 2011275385 A1 (NOKIA CORP.) 10 November 2011 (2011-11-10) description, paragraphs [0011]-[0107] | 1-31 |
| A | CN 111818558 A (GUANGDONG COMMUNICATIONS & NETWORKS INSTITUTE) 23 October 2020 (2020-10-23) entire document | 1-31 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 July 2023** | **01 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/092862**

| Patent document cited in search report | | | Publication date (day/month/year) | Patent family member(s) | | | Publication date (day/month/year) |
|---|---|---|---|---|---|---|---|
| CN | 115604812 | A | 13 January 2023 | WO | 2023273783 | A1 | 05 January 2023 |
| CN | 112954583 | A | 11 June 2021 | CN | 112954583 | B | 02 August 2022 |
| CN | 109428657 | A | 05 March 2019 | CN | 109428657 | B | 13 August 2021 |
| CN | 113424610 | A | 21 September 2021 | WO | 2020163983 | A1 | 20 August 2020 |
| US | 2011275385 | A1 | 10 November 2011 | | None | | |
| CN | 111818558 | A | 23 October 2020 | CN | 111818558 | B | 01 December 2020 |

Form PCT/ISA/210 (patent family annex) (July 2022)

**REFERENCES CITED IN THE DESCRIPTION**

**Patent documents cited in the description**

- CN 202210661942